# NEUE EUROPÄISCHE PATENTSCHRIFT

(11) **EP 2 455 276 B2**
(45) Veröffentlichungstag und Bekanntmachung des Hinweises auf die Entscheidung über den Einspruch: **29.09.2021**
(45) Hinweis auf die Patenterteilung: 18.07.2018
(21) Anmeldenummer: 12154682.4
(22) Anmeldetag: 24.06.2009
(51) Int. Cl.: B62D 59/04

(54) **Hilfsantrieb**
Auxiliary drive
Entraînement auxiliaire

(30) Priorität: 25.06.2008 DE 202008008429 U; 10.02.2009 DE 202009001675 U; 11.04.2009 DE 202009005524 U
(43) Veröffentlichungstag der Anmeldung: 23.05.2012
(62) Teilanmeldung aus: 09163598.7
(73) Patentinhaber: Alois Kober GmbH, 89359 Kötz (DE)
(72) Erfinder: Eckle, Volker, 89183 Holzkirch (DE); Hartleff, Christian, 89073 Ulm (DE); Müller, Thomas, 89346 Ettlishofen (DE); Wilhelm Dr., Klaus, 89423 Gundelfingen (DE); Zacharias, Georg, 86153 Augsburg (DE)
(74) Vertreter: Ernicke, Klaus Stefan

(56) Entgegenhaltungen:
- EP-A- 1 894 822
- EP-A1- 1 714 859
- EP-A2- 1 840 019
- DE-C1- 19 932 118

## Beschreibung

Die Erfindung betrifft einen Hilfsantrieb mit den Merkmalen im Oberbegriff des Hauptanspruchs.

Ein solcher Hilfsantrieb ist aus der EP 1 394 024 A2 bekannt. Er dient als Rangierantrieb für fremdbewegte Fahrzeuge, insbesondere abgekuppelte PKW-Anhänger. Der Hilfsantrieb besteht aus mindestens einer Antriebseinheit mit einem motorisch angetriebenen walzenartigen Antriebselement, die mittels einer Konsole an der Unterseite von einem Längsträger des Anhängerfahrgestells hängend befestigt wird.

Die DE 20 2008 011 794 U1 zeigt eine Vorrichtung zum Befestigen von Rangierhilfsmotoren am Fahrgestell eines Fahrzeuganhängers. Auf den Außenseiten von zwei Längsträgern des Fahrgestells sind Motorträger angeordnet, an denen jeweils einerseits ein Rangierhilfsmotor befestigbar ist und die andererseits jeweils eine Flanschplatte aufweisen, die zur Anlage an der Außenseite des zugeordneten Längsträgers ausgebildet ist. Die Flanschplatte des Motorträgers ist keine Konsole und kein Profilteil.

Die EP 1 894 822 A1 lehrt einen Hilfsantrieb, dessen zwei Antriebseinheiten gemeinsam an einer unter dem Fahrgestell durchgesteckten Querstange befestigt sind, wobei die Querstange mit Beschlägen an der Unterseite von Längsträgern des Anhängerfahrgestells angeflanscht ist.

Andere derartige Hilfsantriebe, die auch eine motorische Zustelleinrichtung haben können, sind aus der EP 1 764 274 A1, EP 1 842 754 A2 und der EP 1 714 859 A1 bekannt.

Die vorbekannten Hilfsantriebe sind hinsichtlich des Platzbedarfs und Gewichts sowie ihrer Steuerbarkeit noch nicht optimal ausgebildet.

Es ist Aufgabe der vorliegenden Erfindung, einen verbesserten Hilfsantrieb aufzuzeigen.

Die Erfindung löst diese Aufgabe mit den Merkmalen im Hauptanspruch.

Die Antriebseinheiten bilden autarke Einheiten, die mittels einer geeigneten Stützeinrichtung mit einer als Profilteil ausgebildeten Konsole am Fahrzeug befestigt werden.

Die Stützeinrichtung kann zur Einzelabstützung und Befestigung einer Antriebseinheit an der Außenseite eines Längsträgers des Fahrgestells vorgesehen und ausgebildet sein.

Die Erfindung sieht die Ausbildung der Konsole zur Führung eines Antriebselements und zu dessen starre Befestigung und Abstützung am Fahrgestell, an dessen Längsträger, vol. Die Ausbildung der Konsole als Profilteil mit mehreren längslaufenden Kanälen bietet dabei zusätzliche Vorteile für die Unterbringung von Leitungen und für die Bildung einer geeigneten Aufnahme für Verbindungselemente zum Fixieren der Konsole, ggf. unter Bildung einer definierten Anbauschnittstelle. Im Profilteil ist das Antriebselement längsbeweglich gelagert und zur Zustellung an das Fahrzeugrad geführt. Hierbei ist eine stufenlose Längsverstellung zur Anpassung an unterschiedliche Schwinghebellängen bzw. Reifendurchmesserkombinationen möglich, was während der Montage des Hilfsantriebs geschehen kann. Die vorerwähnte Aufnahme, die bevorzugt eine Schlitzführung aufweist, erlaubt hierbei eine in Zustellrichtung geeignete Positionierung und Fixierung der Konsole bzw. des Profilteils am Fahrgestell.

Ferner kann ein Anbauteil zwischengeschaltet werden, weiches eine Montagehilfe zur Bildung einer antriebseitigen Anbauschnittstelle und zur Anpassung an eine fahrzeugseitige Schnittstellenvorgabe dienen kann. Weitere Vorteile des Profilteils liegen in seiner hohen Verwindungssteifigkeit und dem geringen Bearbeitungs- und Montageaufwand. Das Profilteil bietet relativ leichte und einfache sowie optisch ansprechende Befestigungsmöglichkeiten. Es ermöglicht ferner, vorzugsweise in Verbindung mit einer Kunststoffgleitlagerung, eine verschleißarme, geräuscharme sowie annähernd wartungsfreie Lagerung. Zugleich kann eine galvanische Entkopplung erreicht werden und die Schallübertragung zwischen dem Antriebselement und dem Fahrgestell gemindert werden. Günstig ist ferner die Funktion des Profilteils als Kabelführung und Kabelschutz, wobei sich auch optische Vorteile ergeben.

Der beanspruchte Hilfsantrieb eignet sich für die Nachrüstung, aber auch für die Erstausrüstung von Fahrzeugen, insbesondere Fahrzeuganhängern. Hierbei kann die Anbausituation durch eine Stützeinrichtung mit besonders ausgebildeten und aneinander adaptierten Anbauschnittstellen an der Stützeinrichtung und am Anhänger optimiert werden. Dies führt wiederum zu einer Kostenreduktion und ermöglicht die Erstausrüstung von Fahrzeuganhängern und deren Fahrgestellen. Es wird außerdem sichergestellt, dass aus Sicherheitsgründen nur geeignete oder ggf. auch nur zugelassene Antriebseinheiten und Fahrzeuge kombiniert werden können.

Der beanspruchte Hilfsantrieb ist billiger, leichter und kompakter als die vorbekannten Hilfsantriebe. Der Einsatz von zwei oder mehr Motoren für das Antriebselement ermöglicht die Verwendung von kleinen, leichten und kostengünstigen Motoren, die mit höheren Drehzahlen laufen und die an die Betriebsanforderungen, insbesondere auch die Lebensdauer, besser angepasst sind.

Die Motoren können dicht nebeneinander und insbesondere parallel angeordnet werden, was zu einer kompakten Bauform führt und bessere Anbau- und Unterbringungsmöglichkeiten am Fahrzeug und eine höhere Flexibilität bietet. Über ein vorgeschaltetes Getriebe, das ggf. mehrstufig ist, können die mehreren Motoren mechanisch gekoppelt und mit dem Antriebselement verbunden werden. Ein mehrstufiges Getriebe ermöglicht eine hohe Untersetzung, was wiederum für den Einsatz besonders kleiner und hochdrehender Motoren günstig ist. Der Gewichtsgewinn durch mehrere kleine Motoren ist größer als das Mehrgewicht durch das Getriebe, weshalb die Antriebseinheit wesentlich leichter als vorbekannte Konstruktionen ist. Die beanspruchte Antriebseinheit kann dabei die gleiche oder sogar eine höhere Leistung als vorbekannte Konstruktionen haben. Mittels einer Motorsteuerung durch Pulsweitenmodulation sind weiche Anfahr- und Bremsvorgänge möglich.

Die beanspruchte Antriebseinheit hat außerdem den Vorteil einer einheitlichen Bauform und einer wahlweisen Montagemöglichkeit an der linken oder rechten Fahrzeugseite. Auch die Gehäusekonstruktion ist verbessert. Sie ist gegen Umwelteinflüsse, insbesondere Spritzwasser, geschützt und nimmt im wesentlichen alle Antriebs- und Steuerkomponenten auf.

Die Antriebseinheiten benötigen nur noch einen Anschluss an eine Energieversorgung, z.B. eine Bordbatterie. Hierfür ist auch die Integration einer Steuerung für jede Antriebseinheit in deren Gehäuse von Vorteil, wobei die Steuerungen über eine vorzugsweise drahtlose Kommunikationseinheit mit der Betätigungseinrichtung, insbesondere einer Fernbedienung, und ggf. auch untereinander kommunizieren können. Die Stützeinrichtung kann zur Einzelabstützung und Befestigung einer Antriebseinheit an der Außenseite eines Längsträgers des Fahrgestells vorgesehen und ausgebildet sein.

Der beanspruchte Hilfsantrieb eignet sich für die Nachrüstung, aber auch für die Erstausrüstung von Fahrzeugen, insbesondere Fahrzeuganhängern. Hierbei kann die Anbausituation durch eine Stützeinrichtung mit besonders ausgebildeten und aneinander adaptierten Anbauschnittstellen an der Stützeinrichtung und am Anhänger optimiert werden. Dies führt wiederum zu einer Kostenreduktion und ermöglicht die Erstausrüstung von Fahrzeuganhängern und deren Fahrgestellen. Es wird außerdem sichergestellt, dass aus Sicherheitsgründen nur geeignete oder ggf. auch nur zugelassene Antriebseinheiten und Fahrzeuge kombiniert werden können.

Günstig ist ferner die wesentliche Verringerung des Bau- und Montageaufwands, wodurch keine besonders ausgebildeten Fachleute erforderlich sind. Durch die autarke Ausbildung der Antriebseinheiten reduziert sich der Aufwand auf den Anbau am Fahrzeug mittels der vorbereiteten Stützeinrichtung und den Anschluss der Energieversorgung. Insbesondere kann auf den externen Anbau einer Steuerung an geeigneter Stelle des Fahrzeugs und auf deren je nach Anbaulage unterschiedlichen Anschluss an die Antriebseinheiten verzichtet werden. Die durch unterschiedliche Kabellängen beim Stand der Technik auftretenden Abstimmungsprobleme der Antriebseinheiten und der Steuerung gehören der Vergangenheit an. Eine Motor- und Antriebssynchronisation kann über die integrierten Steuerungen und die Messung sowie Steuerung bzw. Regelung der Antriebsgeschwindigkeiten erfolgen. Hierbei ergeben sich außerdem die vorher erwähnten erweiterten Steuer- und Lenkmöglichkeiten. Zudem kann ein Sicherheitskonzept realisiert werden, das eine Betätigung des Hilfsantriebs nur bei stehendem Fahrzeug erlaubt.

Auch innerhalb der Antriebseinheiten kann der Kabel- und Schaltaufwand verringert werden. Der vorhandene Platz kann optimal ausgenutzt werden, wobei sich die meisten Komponenten der Antriebseinheit innerhalb eines gemeinsamen Gehäuses befinden können, welches auch ein Lagerteil für das walzenartige Antriebselement beinhalten kann. Ein Metallgehäuse, welches z.B. aus einem Leichtmetall besteht, bietet eine gute Wärmeabfuhr und verringert das Gewicht. Außerhalb des Gehäuses brauchen sich nur wenige Teile der Antriebseinheit zu befinden. Dies können die Antriebswalze und ein Stellelement der Zustelleinrichtung sein. Alle anderen Teile können geschützt im Gehäuseinnenraum untergebracht werden.

Die beanspruchte Gestaltung der Antriebseinheit hat außerdem Vorteile für die Anbaumöglichkeiten und die Zustellsituation. Für den Anbau genügt eine flach bauende Konsole, die in geeigneter Weise mittels der Stützeinrichtung am Fahrgestell befestigt wird und die auch die Führung und Lagerung für die bei der Zustellung bewegten Teile bereit stellt. Hierbei kann sich insbesondere das Gehäuse der Antriebseinheit als Ganzes relativ zur Konsole bewegen, wobei sich das besagte Stellelement an der Konsole abstützt. Die Konsole und die Zustellachse bzw. Kraftwirkachse der Zustelleinrichtung können im wesentlichen mittig zum querliegenden Antriebselement ausgerichtet sein. Dies verbessert die Kinematik, wobei Kippbelastungen und andere negative Einwirkungen weitgehend ausgeschlossen werden.

Die beanspruchten Antriebseinheiten lassen sich wahlweise vor oder hinter der Fahrzeugachse montieren. Ihre Formgebung und der Bauraumbedarf können dabei auf vorhandene Anbauteile am Fahrzeug, Stoßdämpfer, Radlenker oder dgl., optimiert sein. Die Antriebseinheiten stellen Universaleinheiten dar, die sich für unterschiedlichste Arten und Formen von Fahrzeugen, insbesondere Fahrzeuganhängern, eignen. Günstig ist außerdem, dass durch die wesentlich verkleinerte Baugröße und die optimierten Anbaumöglichkeiten die Antriebseinheiten am Fahrzeug nicht störend in Erscheinung treten. Insbesondere beeinträchtigen sie nicht die Bodenfreiheit des Fahrzeugs und die Zugänglichkeit zu den Fahrzeugkomponenten.

Die beanspruchte Bedieneinrichtung hat den Vorteil einer ergonomisch günstigen und insbesondere intuitiven Bedienung des Hilfantriebs. Die Funktion ist selbsterklärend und ermöglicht eine "blinde" Benutzung. Durch die mehrachsige Eingabe- und Bedienmöglichkeit können beliebige Schwenkwinkel oder Kurvenradien eingestellt und mit dem Fahrzeug beim Rangieren gefahren werden. Der Bediener kann das Fahrzeug während der Fahrt beobachten und entsprechend durch Betätigung der Bedieneinrichtung reagieren und ggf. die Fahrbewegung korrigieren. Der Rangierbetrieb wird hierdurch vereinfacht und verbessert. Ein umständliches und zeitraubendes Hin- und Herfahren zum Erreichen der gewünschten End- oder Rangierposition kann vermieden werden.

Durch die Bedieneinrichtung können die linken und rechten Antriebseinheiten gemeinsam und in der gewünschten Weise beaufschlagt und gesteuert werden, wobei in der Antriebssteuerung die Fahrtrichtungssignale in eine entsprechende Antriebsbewegung umgesetzt werden. Dies ist wesentlich günstiger und komfortabler als eine Bedienung mit Einzeltasten. Insbesondere können runde und absatzlose Kurven gefahren werden.

Die Bedieneinrichtung bietet ferner die Möglichkeit, die Antriebsgeschwindigkeit in der gewünschten Weise zu beeinflussen. Hierbei kann z.B. zwischen einer raschen Annäherungsfahrt und einer langsameren Such- oder Rangierfahrt gewählt werden. Eine Geschwindigkeitsbeeinflussung ist außerdem zum Kurvenfahren günstig.

Auch eine Setup-Prozedur für den Hilfsantrieb zur Anpassung an die vorhandene Fahrzeugausbildung ist möglich. Dies ermöglicht eine optimale Bedienung und Funktion des Hilfsantriebs und der Steuerung. Außerdem kann eine einheitliche Bedieneinrichtung für unterschiedlichste Fahrzeuge eingesetzt werden.

Haptische Hilfen und Anzeigen verbessern die Ergonomie und erleichtern die Bedienung. Sie informieren den Nutzer auch über etwaige außergewöhnliche Betriebszustände. Mittels einer drahtlosen Kommunikation kann die Betätigungseinrichtung als leichtes, handliches und transportables Fernbedienungsgerät verwendet werden. Der Bediener kann von beliebigen Stellen aus das Fahrzeug dirigieren und lenken. Sichtprobleme, tote Winkel oder dgl. können vermieden werden. Ggf. ist sogar eine Fernbedienung aus dem Fahrzeuginneren heraus möglich. Ferner wird die Zielgenauigkeit beim Rangieren verbessert.

Das bevorzugte Ausführungsbeispiel der Betätigungseinrichtung bzw. Fernbedienung kann unterschiedliche Ausbildungen und Designs haben. Günstig ist eine visuelle Aufteilung in drei Zonen für Anzeige, Steuerfeld und Bedienfeld, insbesondere für die Antriebszustellung. Über eine Anzeige können Fehlermeldung dauerhaft sichtbar gemacht werden. Große Piktogramme sorgen für klare Erkennbarkeit. Ein Symbol für die Anhängerdeichsel- bzw. kupplung kann als Richtungsanzeige dienen. Das Steuerfeld und Bedienfeld zeichnet sich durch reduzierte Richtungsweisungen (wg.Blindbedienung), durch eine Wohnwagensymbolik durch Outline und durch Symbole für Kreisdrehung in "Radkästen" aus. Das Steuerfeld kann auch durch einen Kreis um den Joystick hervorgehoben werden. Erhabene Bedientasten sind günstig zur haptischen Orientierung. Die Tastenstellung und die Graphik signalisieren Funktion und Betrieb bzw. Position der Antriebszustellung. Die Betätigungseinrichtung kann außerdem ein akustisches Signalgerät, z.B. einen Lautsprecher haben.

Ein weiterer Vorteil besteht in der Fernsteuerungsmöglichkeit für die ggf. motorische Zustellung der Antriebseinheiten und der Antriebselemente an die Fahrzeugräder, was von der gleichen Betätigungseinrichtung aus möglich ist. Die Zustellung kann für die linke und rechte Seite getrennt und eigenständig vorgenommen werden, wobei ggf. nur eine Antriebseinheit zugestellt wird. Außerdem erhält der Nutzer von der Betätigungseinrichtung eine Rückmeldung über Zustand und Funktion der Zustellung. Dies ist vor allem für Zustelleinrichtungen mit eigenen Zustellantrieben günstig, die ggf. über eine Weg- oder Positionsüberwachung verfügen. Eine sichere Zustellung ist insbesondere für Fahrten in steilem Gelände wichtig, um die Fahrzeugbewegungen immer kontrollieren zu können. Eine lineare Zustellung ist hierfür und auch für die Fernbedienung besonders günstig.

Der beanspruchte Hilfsantrieb hat insbesondere den Vorteil, dass er eine Steuerung der Geschwindigkeiten der Antriebseinheit(en) während der Fahrt erlaubt. Dies bietet außerdem die Möglichkeit, das Fahrzeug in beliebige Richtungen lenken zu können. Die Betätigungseinrichtung, insbesondere in Form einer Fernbedienung, kann hierfür entsprechend geeignete Bedienelemente aufweisen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: einen Fahrzeuganhänger mit einem Aufbau und einem Hilfsantrieb in Ruhestellung und in Seitenansicht,
- Figur 2:: eine abgebrochene und vergrößerte Draufsicht auf den Hilfsantrieb gemäß Pfeil II von Figur 1,
- Figur 3:: eine abgebrochene und vergrößerte Seitenansicht des Hilfsantriebs von Figur 1 in Treibstellung,
- Figur 4:: eine vergrößerte Draufsicht auf den Hilfsantrieb gemäß Pfeil IV von Figur 3,
- Figur 5:: eine Variante zu Figur 3 mit einer anderen Stützeinrichtung mit adaptierten Anbauschnittstellen,
- Figur 6: bis 9: eine Antriebseinheit des Hilfsantriebs in verschiedenen perspektivischen Darstellungen,
- Figur 10:: eine perspektivische Detaildarstellung eines Geschwindigkeitsmessers in der Antriebseinheit,
- Figur 11:: eine Fernbedienung mit einer Folientastatur,
- Figur 12: bis 19: verschiedene Varianten der Antriebseinheit und der Stützeinrichtung,
- Figur 20:: eine perspektivische Ansicht einer Variante des Hilfsantriebs und der Stützeinrichtung
- Figur 21 bis 23:: verschiedene Ansichten der Variante von Figur 20,
- Figur 24 bis 26:: verschiedene Ansichten der Einbausituation der Variante von Figur 20 am Fahrzeug,
- Figur 27:: eine perspektivische Ansicht einer Variante der Betätigungseinrichtung,
- Figur 28:: eine Draufsicht der Betätigungseinrichtung von Figur 27,
- Figur 29:: eine Draufsicht auf eine Variante der Betätigungseinrichtung von Figur 27 und
- Figur 30: und 31: verschiedene Ansichten der Betätigungseinrichtung.

Die Erfindung betrifft einen Hilfsantrieb (2) für ein Fahrzeug (1). Sie betrifft ferner eine Betätigungseinrichtung (20) für einen solchen Hilfsantrieb (2) und ein mit einem solchen Hilfsantrieb (2) ausgerüstetes Fahrzeug (1). Auch verschiedene Komponenten des Hilfsantrieb (2) beinhalten eigenständige Erfindungen, die sich mit Vorteil in Verbindung mit konventionellen Konstruktionen einsetzen lassen. Insbesondere kann die Betätigungseinrichtung (20) mit anderen konventionellen Hilfsantrieben (2) eingesetzt werden.

Das Fahrzeug (1) kann von beliebiger Art und Größe sein. Vorzugsweise handelt es sich um ein fremdbewegtes Fahrzeug, insbesondere einen Fahrzeuganhänger, der von einem Zugfahrzeug geschleppt werden kann. Der Anhänger (1) kann ein PKW-Anhänger sein.

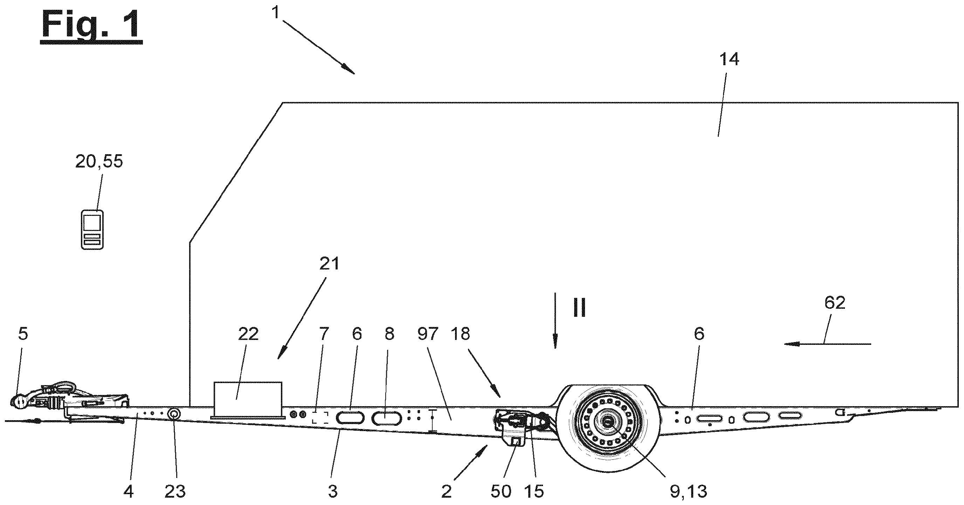

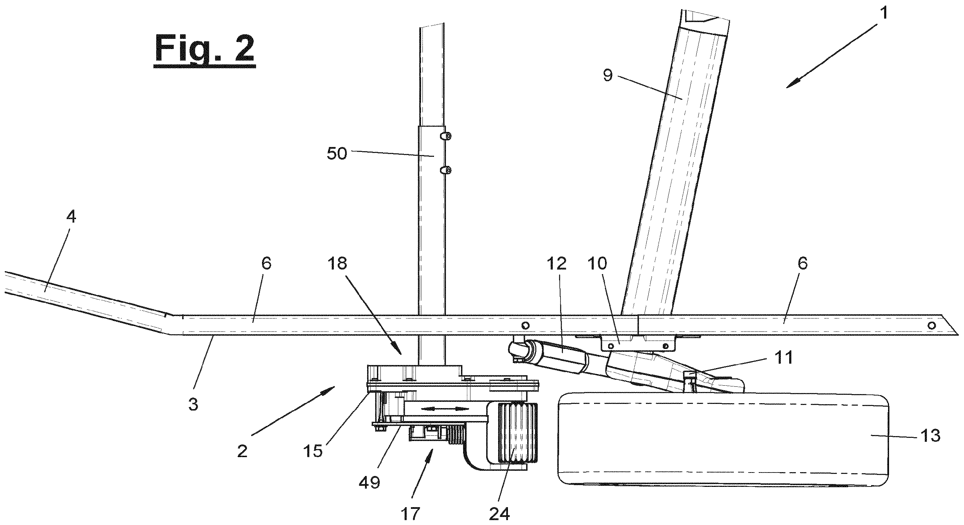

Figur 1 zeigt einen solchen Anhänger (1) in einer schematischen Darstellung. Er weist ein Fahrgestell (3) mit einer frontseitigen starren Zugdeichsel (4) auf, die eine Anhängekupplung (5) trägt. Die Zugdeichsel (4) kann z.B. als V-Deichsel oder als Rohrdeichsel ausgebildet sein. Der Anhänger (1) hat ferner mindestens eine Achse (9) mit endseitig an Naben montierten Fahrzeugrädern (13). Die eine oder mehreren Achsen (9) sind am Fahrgestell oder Chassis (3) in geeigneter Weise befestigt, z.B. über Achsträgerschilde (10), wie sie in Figur 2 angedeutet sind.

Das Fahrgestell oder Chassis (3) weist einen oder mehrere Längsträger (6) auf, die z.B. als C-, U-, L- oder Z-förmig abgekantete Metallprofile, insbesondere Stahlprofile ausgebildet sind und einen Mittelsteg (97) mit Obergurt und/oder Untergurt sowie Öffnungen (8), insbesondere im Mittelsteg (97), aufweisen können. Die Längsträger (6) können durch einen oder mehrere Querträger (7) untereinander querverbunden sein. Eine Querverbindung kann alternativ über einen Aufbau (14) erfolgen, wobei auf Querträger (7) verzichtet werden kann. Die Achsträgerschilde (10) sind an den Längsträgern (6) befestigt, insbesondere über Napfverschraubungen, z.B. entsprechend der DE 93 04 926 U1. Das Fahrgestell (3) kann teilbar ausgebildet sein, wobei die Fahrgestellteile untereinander ebenfalls durch solche Napfverschraubungen verbunden sein können, wie dies z.B. die EP 0 479 115 B1 zeigt.

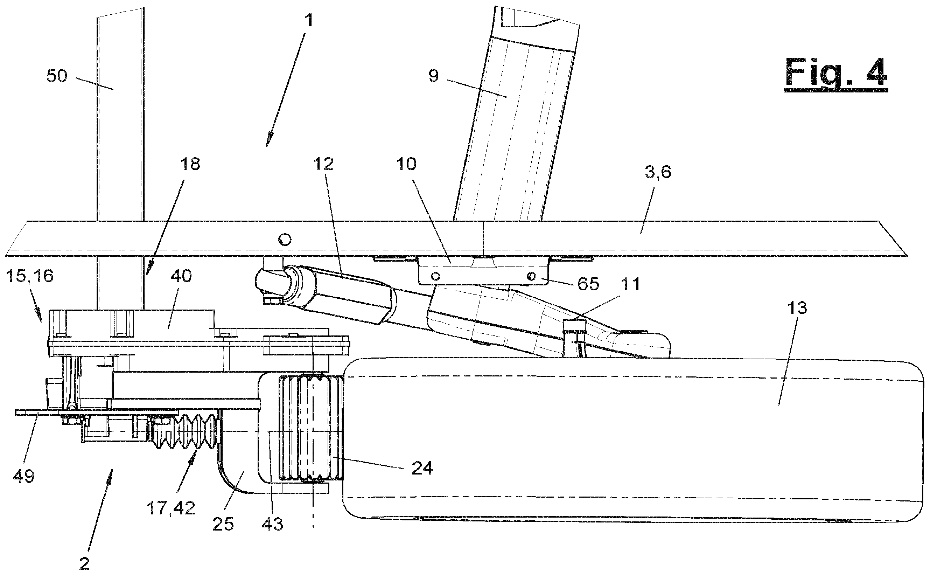

Die eine oder mehreren Achsen (9) können in beliebig geeigneter Weise ausgebildet sein, z.B. als Längslenker- oder Schräglenkerachse. Sie weisen ein z.B. in Figur 2 und 4 dargestelltes Achsträgerrohr auf, das mit den endseitig montierten Achsböcken oder Achsträgerschilden (10) an den beiden Längsträgern (6) befestigt ist. Im Achsrohr können Federelemente, z.B. Gummischnüre, Torsionsstäbe oder dgl. angeordnet sein. Am Ende weist die Achse (9) beidseits Radlenker (11) auf, die Achszapfen zur Aufnahme der Radnaben tragen. Ferner können Stoßdämpfer (12) vorhanden sein, wie sie in Figur 2 und 4 angedeutet sind. Sie sind zwischen den Längsträgern (6) und dem Fahrzeugrad (13) angeordnet. Auch eine Luftfederung mit Federbälgen ist möglich.

Das Fahrzeug bzw. der Anhänger (1) kann einen Aufbau (14) von beliebiger Art und Größe aufweisen, der mit dem Fahrgestell (3) verbunden ist oder wird. In Figur 1 ist z.B. ein Wohnwagenaufbau angedeutet. Ferner kann das Fahrzeug (1) bzw. der Anhänger eine Energieversorgung (21) aufweisen, die in Figur 1 schematisch angedeutet ist. Diese besteht z.B. aus einer Batterie (22) und ggf. einer Steckdose (23), die am Fahrgestell (3) über geeignete Aufnahmen befestigt sind. Ferner kann ein Stromkabel an der Anhängerkupplung (5) zur Verbindung mit einem Zugfahrzeug vorhanden sein. Der Anhänger (1) kann ferner eine Bremseinrichtung haben, die als Betriebsbremse und/oder als Feststellbremse ausgebildet sein kann. Sie kann z.B. über eine Auflaufeinrichtung, einen Handbremshebel oder dgl. betätigt werden. In den Fahrzeugrädern (3) sind geeignete Bremsorgane, z.B. Trommelbremsen, angeordnet. Die normale Fahrtrichtung (62) bzw. die Fahrzeuglängsachse ist in Figur 1 durch einen Pfeil angegeben.

Der Hilfsantrieb (2) dient zur motorisierten Bewegung des Fahrzeugs (1). Dies kann z.B. ein Rangieren eines vom Zugfahrzeug abgekuppelten Anhängers sein. Der Hilfsantrieb (2) ist in diesem Fall ein Rangierantrieb, mit dem z.B. ein Wohnwagen auf einen Abstellplatz bewegt wird. Ansonsten kann der Hilfsantrieb (2) auch in Verbindung mit anderen Fahrzeugen und zu anderen Zwecken eingesetzt werden.

Der Hilfsantrieb (2) weist mindestens eine Antriebseinheit (15,16) auf, die an das Fahrzeugrad (13) und insbesondere an dessen Lauffläche mittels einer Zustelleinrichtung (17) zugestellt werden kann. Im gezeigten Ausführungsbeispiel eines einachsigen Anhängers (1) ist an beiden Längsseiten jeweils eine Antriebseinheit (15,16) angeordnet. Sie kann vor oder hinter dem Fahrzeugrad (13) angeordnet sein. Bei mehrachsigen Fahrzeugen (1) können entsprechend mehr als zwei Antriebseinheiten (15,16) vorhanden sein.

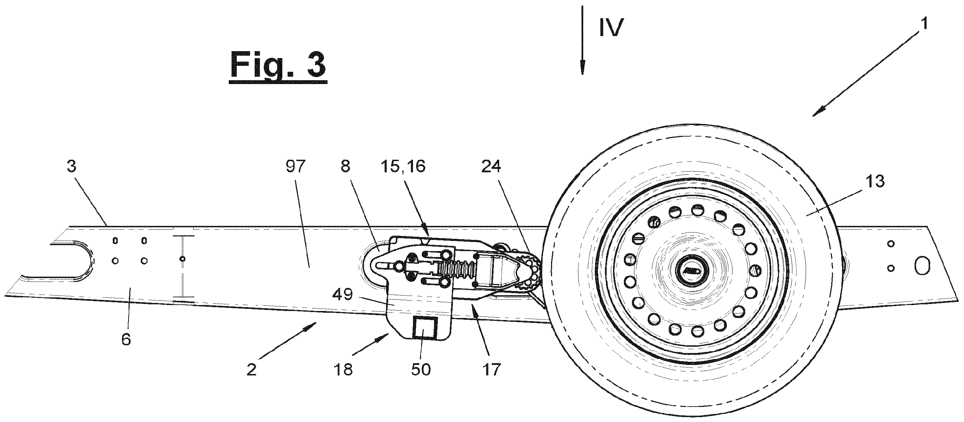

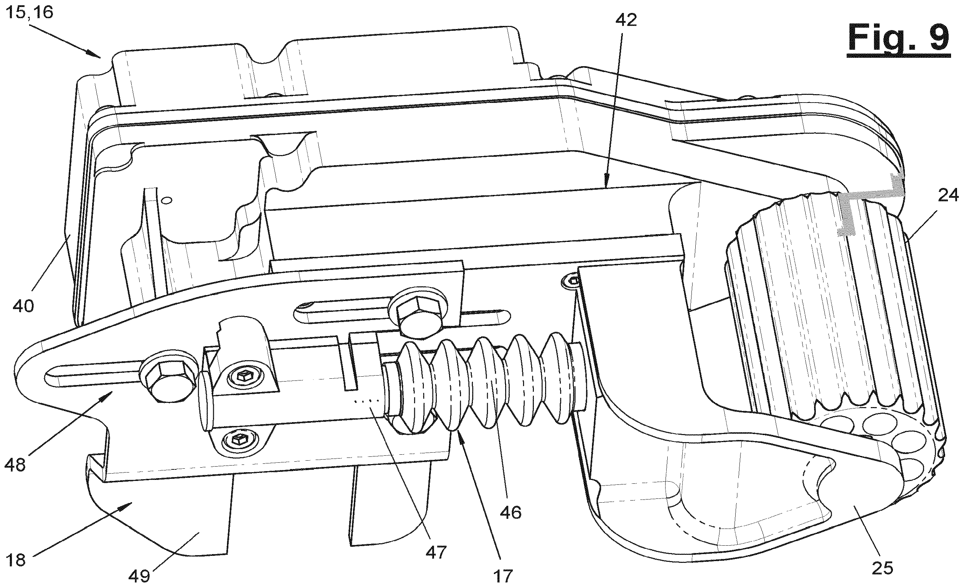

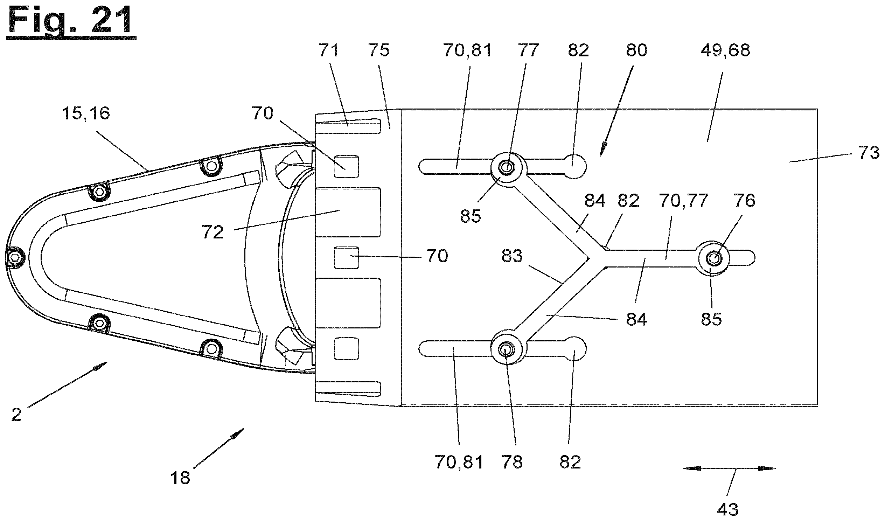

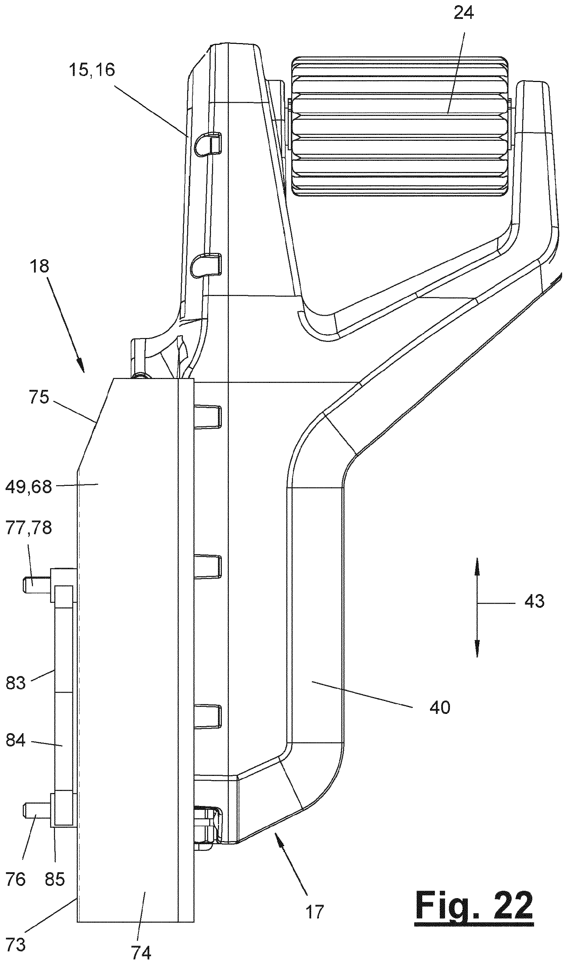

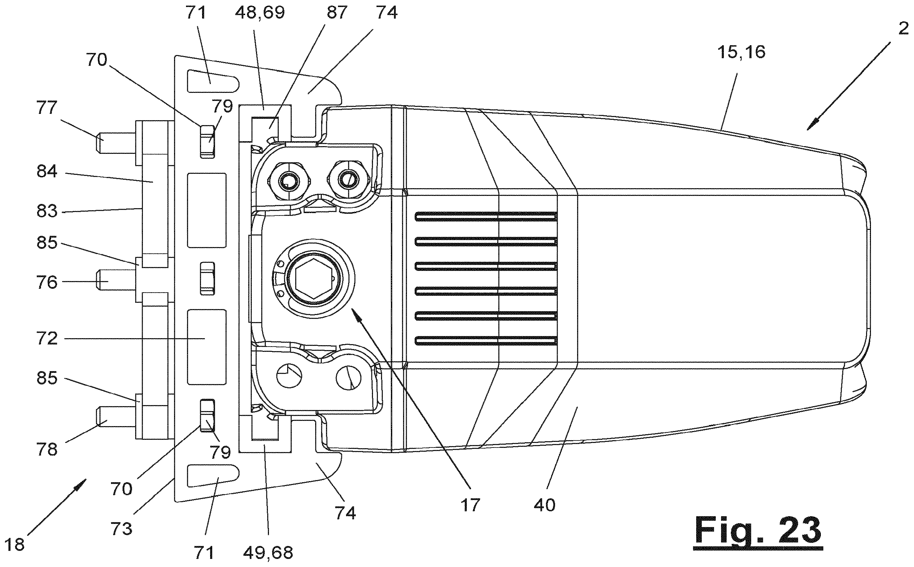

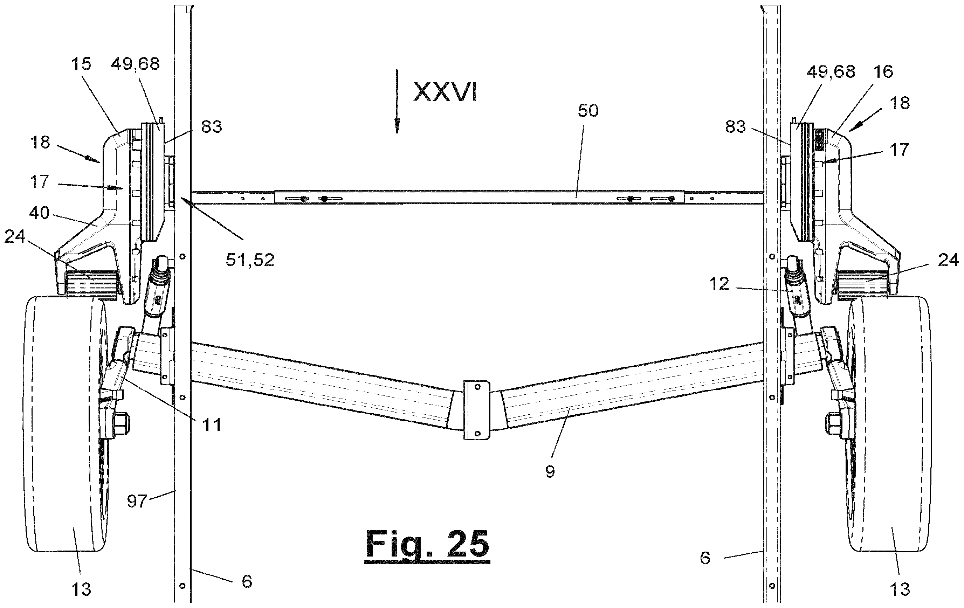

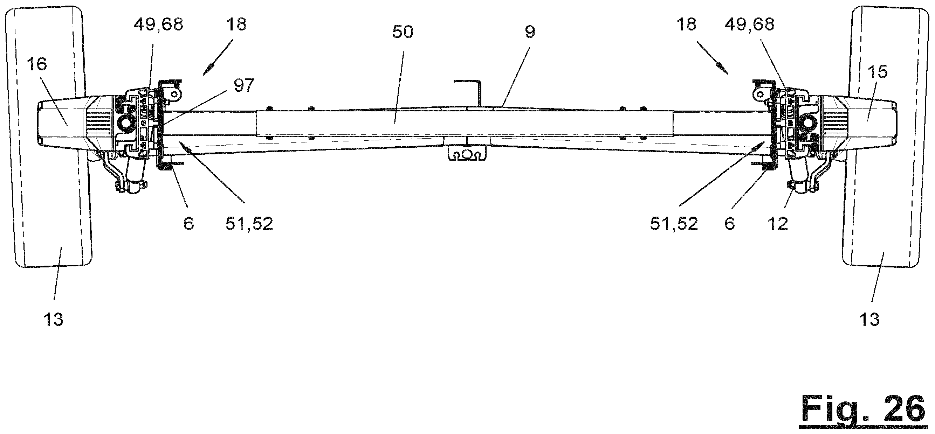

Die Antriebseinheit (15,16) kann zwischen einer in Figur 1 und 2 gezeigten Lösestellung oder Ruhestellung in eine in Figur 3 bis 5 dargestellte Arbeits- oder Treibstellung am Fahrzeugrad (13) hin und her bewegt werden. Die Antriebseinheit (15,16) ist über eine Stützeinrichtung (18) am Fahrzeug (1), insbesondere an dessen Fahrgestell (3), befestigt. Figur 1 bis 9, 12, 13, 14, 15 und 20 bis 26 zeigen verschiedene Ausführungsbeispiele der Stützeinrichtung (18). Die Befestigung erfolgt an einem aufrechten Mittelsteg (97) des Längsträgers (6).

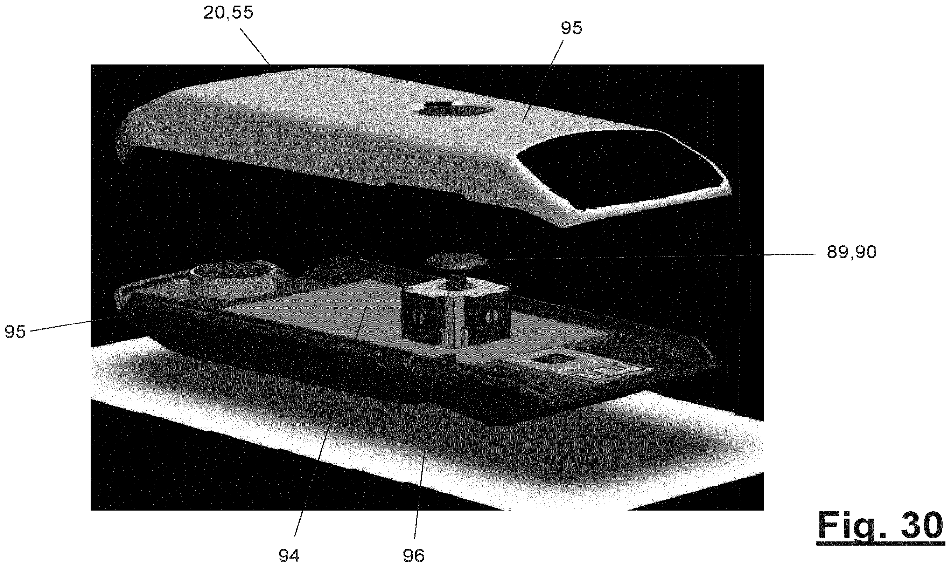

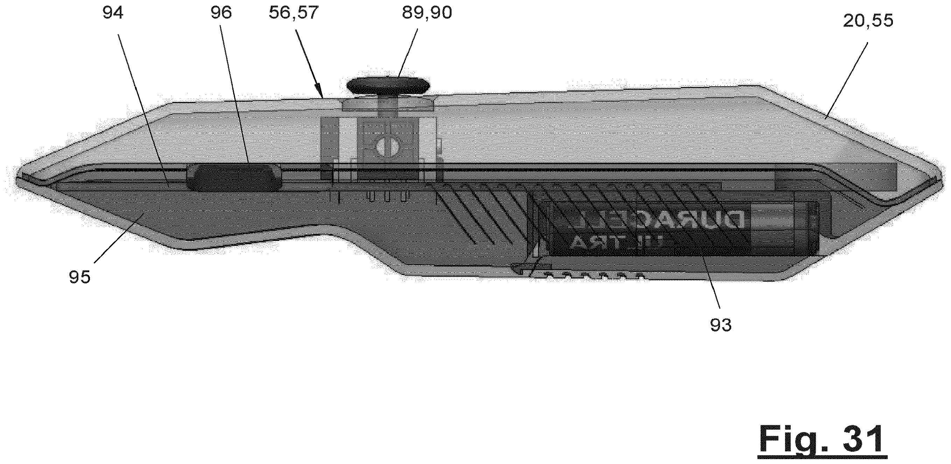

Die Antriebseinheit (15,16) kann mit der Energieversorgung (21) verbunden werden. Zum Einschalten und Bedienen des Hilfsantriebs (2) und seiner einen oder mehreren Antriebseinheiten (15,16) ist eine Betätigungseinrichtung (20) vorgesehen, die in Figur 1 und 11 sowie 27 bis 31 in verschiedenen Varianten beispielsweise dargestellt ist.

Die Antriebseinheiten (15,16) sind vorzugsweise gleich ausgebildet und können wahlweise an der linken oder rechten Fahrzeugseite und vor oder hinter dem Fahrzeugrad (13) montiert werden. Jede Antriebseinheit (15,16) weist mindestens ein Antriebselement (24) auf, welches beliebig ausgebildet sein kann. Im gezeigten Ausführungsbeispiel besteht es aus einer längs der Radachse ausgerichteten Treibwalze, die von einer bevorzugt elektrischen Motoranordnung (26,27) angetrieben wird und die mit ihrem Mantel über die Zustelleinrichtung (17) an das Fahrzeugrad (13), insbesondere an dessen Lauffläche in der Betriebsstellung gemäß Figur 3 bis 5 angedrückt werden kann. Figur 1 und 2 zeigen die zurückgezogene Ruhestellung mit abgehobener Treibwalze. Die Walzendrehung wird durch Kraftschluss und/oder Formschluss auf das Fahrzeugrad (13) übertragen. Der Walzenmantel kann hierfür eine treibgünstige Form aufweisen und z.B. längslaufende Rippen (66) haben. Die Treibwalze (24) kann ferner einen für die Kraftübertragung günstigen großen Durchmesser von z.B. ca. 70 mm oder mehr haben. Die Antriebs- und Ruhestellung können arretiert werden.

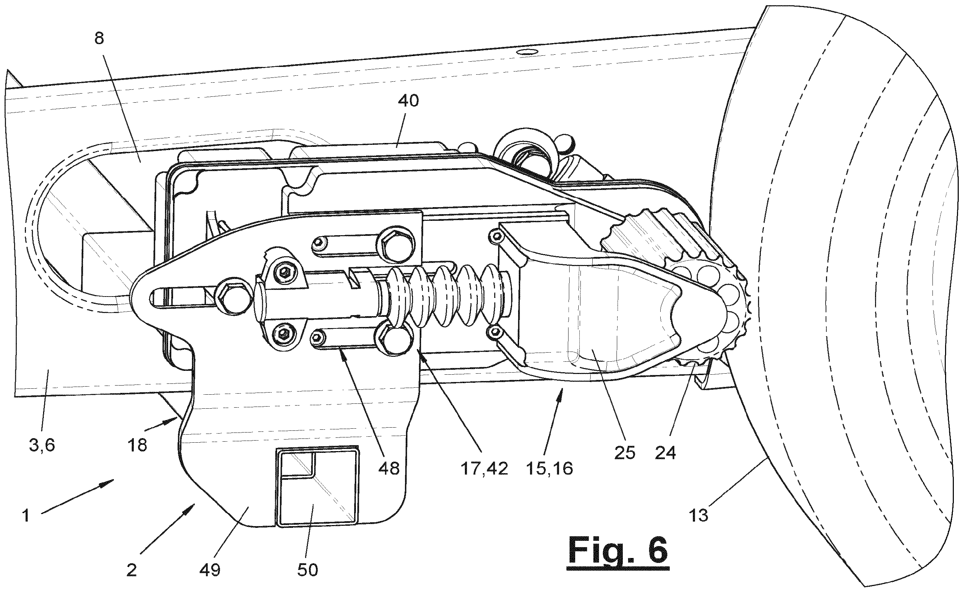

Die Antriebseinheit (15,16) ist mit ihrem Aufbau in Figur 6 bis 10 näher dargestellt. Sie weist mehrere Motoren (26,27) auf, die gemeinsam auf das Antriebselement (24) treibend einwirken und die erforderliche Antriebsleistung bringen. Im gezeigten Ausführungsbeispiel sind zwei Motoren (26,27) vorhanden, die mit Parallelausrichtung nebeneinander angeordnet sind. Die Motoren (26,27) sind als kleine, leichte und hochdrehende Elektromotoren, insbesondere Gleichstrommotoren, ausgebildet. Sie haben z.B. eine Leistung von ca. 220 W bei einer Nenndrehzahl von ca. 13300 U/min und einen Außendurchmesser von ca 52 mm. Ihre gemeinsame Baugröße ist kleiner als diejenige eines Einzelmotors bei gleicher Leistung.

Die Motoren (26,27) sind z.B. längs der Zustellrichtung oder Zustellachse (43) und längs der Fahrzeuglängsachse (62) ausgerichtet. Sie sind z.B. übereinander angeordnet und brauchen wenig Platz in Querrichtung zum Längsträger (6) bzw. zur Fahrzeuglängsachse (62), wodurch die Antriebseinheit (15,16) mit ihrem Gehäuse (40) entsprechend schmal bauen kann.

Die Antriebseinheit (15,16) kann ein Getriebe (29) zwischen den Motoren (26,27) und dem Antriebselement (24) aufweisen. Das Getriebe (29) kann eine Selbsthemmung aufweisen, um bei Stromausfall bei Bergfahrt ein Rückrollen des Fahrzeugs zu verhindern. Die Selbsthemmung ist aber nicht zwingend. Das Getriebe (29) kann eine oder mehrere Stufen haben und kann in beliebiger Weise ausgebildet sein. Im gezeigten Ausführungsbeispiel hat das Getriebe (29) drei Getriebestufen (30,31,32). Die erste Getriebestufe (30) wird von einem Schneckenrad und zwei an dessen Ober- und Unterseite kämmenden Schneckenwellen gebildet, die sich auf den Abtriebswellen (28) der Motoren (26,27) befinden. Die Motoren (26,27) sind über die erste Getriebestufe (30) gekoppelt und treiben das Schneckenrad gemeinsam an. Die zweite Getriebestufe (31) und die dritte Getriebestufe (32) können Stirnverzahnungen haben. Alternativ sind andere Getriebeausbildungen mit Planetengetriebe oder dgl. möglich. Die letzte Getriebestufe (32) ist mit dem Antriebselement (24) an dessen einem Ende verbunden.

Das Antriebselement (24) ragt seitlich und quer vom Getriebe (29) weg und ist vorzugsweise an beiden Enden drehbar gelagert. Hierfür ist ein geeignetes Lagerteil (25) vorhanden, welches z.B. als gehäuseartige Lagergabel ausgebildet und am Gehäuse (40) abgestützt ist. Sie kann einen Bestandteil des Gehäuses (40) der Antriebseinheit (15,16) bilden und Komponenten der Zustelleinrichtung (17) aufnehmen.

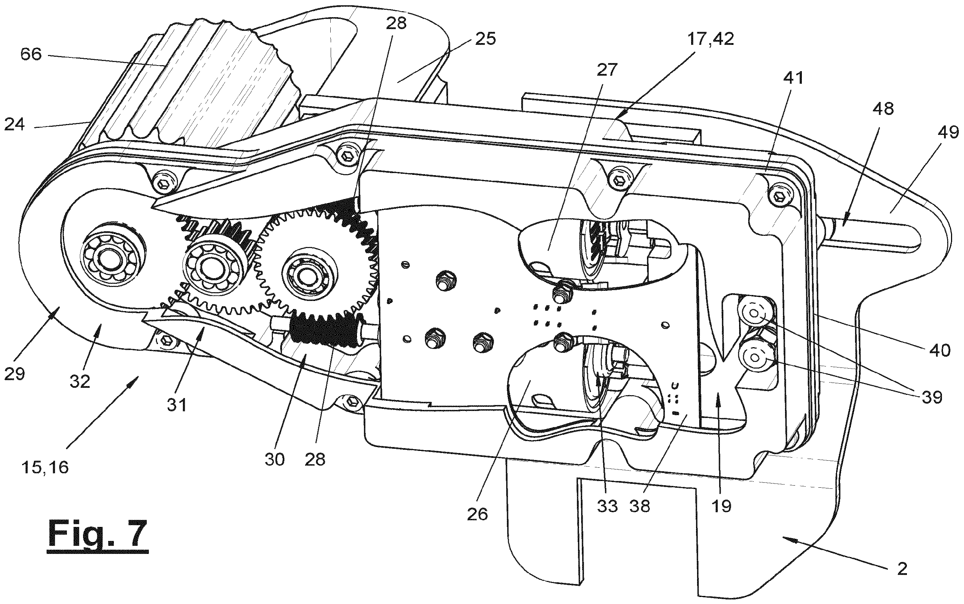

Das Gehäuse (40) ist mehrteilig ausgebildet und besteht z.B. aus einem schalenförmigen Unterteil und dem in Figur 7 durchbrochen dargestellten Deckel, die über eine umlaufende Dichtung (41) dicht verbunden sind. An das Gehäuseunterteil kann der eine Gabelarm des Lagerteils (25) angeformt oder angeschlossen sein, wobei dieser zumindest bereichsweise einen Hohlraum aufweist. Das Gehäuse (40) besteht aus einem geeigneten Material, z.B. aus Metall, insbesondere einer Leichtmetalllegierung, und kann die von den Motoren (26,27) und anderen Komponenten erzeugte Wärme nach außen abführen.

Zumindest eine Antriebseinheit (15,16), vorzugsweise alle Antriebseinheiten (15,16) besitzen eine integrierte elektronische Steuerung (38). Deren Platine ist im Gehäuse (40) untergebracht und z.B. unter den Motoren (26,27) am Gehäuseboden angeordnet, der die Leistungselektronik kühlt. Die Steuerung (38) steuert die Motoren (26,27) und kann diese ggf. auch regeln.

Die Antriebseinheit (15,16) weist ferner eine Kommunikationseinrichtung (19) auf, die an die Steuerung (38) angeschlossen und ggf. auf deren Platine angeordnet ist. Über die Kommunikationseinrichtung (19) kann zumindest eine Steuerung (38) mit der Betätigungseinrichtung (20) kommunizieren, die eine passende Kommunikationseinrichtung (96) aufweisen kann. Ggf. können auch die Steuerungen (38) von mehreren Antriebseinheiten (15,16) untereinander kommunizieren. Die Steuerungen (38) können untereinander gleichberechtigt sein oder in einer Master/Slave-Beziehung stehen.

Die Kommunikationseinrichtung (19) kann für einen drahtlosen Datenaustausch ausgelegt sein und hierfür z.B. als Funkmodul mit Sende- und Empfangseinheit und ggf. mehreren umschaltbaren Funkfrequenzen ausgebildet sein. Die Funkantenne kann im Gehäuse (40) angeordnet oder integriert sein. Sie kann alternativ außerhalb des Gehäuses (40) angeordnet sein und kann sich auch an einer oben liegenden Stelle des Anhängers (1) befinden, was Vorteile zum Schutz vor Umwelteinflüssen bietet. Beim Einsatz des Hilfsantriebes (2) für Bootsanhänger ist dies sinnvoll, damit die Funkantenne nicht im Wasser eintaucht.

Die Kommunikationseinrichtung (19) kann alternativ Daten per Infrarot, Ultraschall oder auf andere Weise drahtlos übertragen. In einer weiteren Abwandlung ist auch eine Kabelverbindung zur Betätigungseinrichtung (20) und ggf. zu einer anderen Steuerung (38) möglich. Bei einer drahtlosen Kommunikation weist die Betätigungseinrichtung (20) eine entsprechende Gegenstation (96) mit einem Funkmodul oder dgl. auf.

In der gezeigten Ausführungsform mit drahtloser Kommunikation haben die Antriebseinheiten (15,16) am Gehäuse (40) nur einen nach außen führenden Kabelanschluss (39) für den Anschluss der Energieversorgung (21) und vorzugsweise zur Stromzuführung. Ansonsten sind die Antriebseinheiten (15,16) autark und in sich abgeschlossen. Am Kabelanschluss (39) kann eine Membrandichtung zur feuchtigkeitssicheren Belüftung des Gehäuseinnenraums angeordnet sein.

Die Antriebseinheit (15,16) kann eine Messeinrichtung (33) aufweisen, die mit der Steuerung (38) verbunden sein kann und die ein oder mehrere Messelemente für die Erfassung von ein oder mehreren Messwerten aufweist. Die Messeinrichtung (33) weist z.B. einen Geschwindigkeitsmesser (34) auf, mit dem die Treibgeschwindigkeit der Antriebseinheit (15,16) gemessen wird. Der Geschwindigkeitsmesser (34) kann z.B. die Drehzahl von einem oder mehreren Motoren (26,27) aufnehmen. Alternativ kann eine Geschwindigkeitsmessung an anderer Stelle, z.B. am Getriebe (29) oder am Antriebselement (24) stattfinden. Der Geschwindigkeitsmesser (34) kann mehrfach vorhanden sein. Er kann ferner in beliebig geeigneter Weise ausgebildet und angeordnet sein.

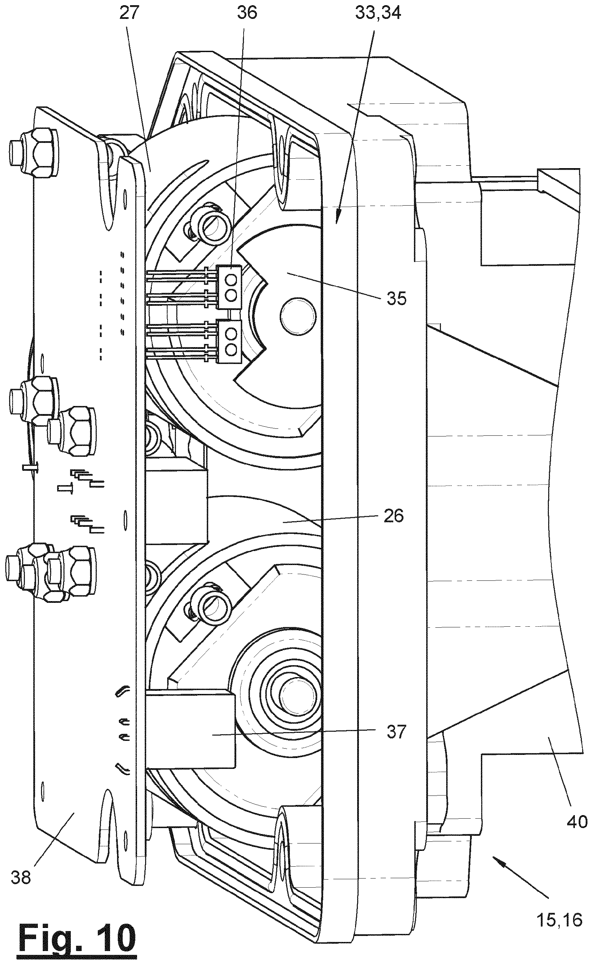

Im gezeigten Ausführungsbeispiel von Figur 10 weist der Geschwindigkeitsmesser (34) einen Encoder (35), z.B. eine konturierte Encoderscheibe, an einer Motorwelle auf. Zur Abnahme der Motor- und Encoderdrehung ist ein geeigneter Sensor (36) vorhanden, der z.B. als Optokoppler an der Platine der Steuerung (38) ausgebildet ist.

Mittels des Geschwindigkeitsmessers (34) können die Motoren (26,27) von der Steuerung (38) auf eine gewünschte Drehzahl bzw. eine Geschwindigkeit gesteuert und ggf. geregelt werden. Sie können ferner untereinander auf Gleichlauf gesteuert oder geregelt werden. Hierauf kann alternativ bei einer mechanischen Motorkopplung über das Getriebe verzichtet werden. Ferner können die Motoren von der Steuerung (38) mittels einer geeigneten elektronischen Steuerlogik mit Umrichter, z.B. mittels Pulsweitenmodulation oder Frequenzmodulation, gesteuert und insbesondere in ihrem Anfahr- und Bremsverhalten beeinflusst werden.

Die Messeinrichtung (33) kann mindestens einen anderen Sensor (37) aufweisen. Dies kann z.B. ein Beschleunigungssensor sein, mit dem die Fahrzeugbewegungen in einer oder mehreren Raumachsen und die dabei auftretenden Beschleunigungen aufgenommen werden. Hierüber kann z.B. festgestellt werden, ob das Fahrzeug (1) über eine längere Steigung oder über ein kurzzeitiges Hindernis, z.B. eine Wurzel, bewegt wird. Über diesen Messwert kann die Motorleistung angepasst werden. Bei einer Steigungsstrecke kann z.B. die Motorleistung über die Steuerung (38) reduziert werden, um Überhitzungen zu vermeiden. Bei einem kurzzeitigen Hindernis ist dies nicht notwendig. Hier ist eher die volle oder sogar eine ggf. erhöhte Motorleistung vorgesehen.

Durch den Beschleunigungssensor kann die Steuerung auch die Einbaulage erkennen und feststellen, auf welcher Seite welche Antriebseinheit angebaut ist. Dies kann eine automatische Kalibrierung darstellen. Ansonsten und insbesondere wenn sowohl ein Anbau vor als auch hinter der Achse möglich ist erfolgt die Konfiguration über die Fernbedienung.

Der Beschleunigungssensor kann auch als Sicherung gegen unbefugtes Zustellen des Hilfsantriebs (2) dienen, z.B. während der Fahrt im Zugbetrieb des Anhängers (1). Die Beschleunigungs-Messdaten sind im Fahrbetrieb nämlich andere als im Stand. Das Sicherheitskonzept sieht eine Fahrterkennung über Beschleunigungssensoren vor, wobei z.B. die Vertikalbewegungen bzw. -schwingungen des Fahrzeugs (1) gemessen werden und hieraus von der Steuerung (38) ein Fahrtbetrieb detektiert wird. Bei dessen Vorliegen kann die Aktivierung des Hilfsantriebs (2) und insbesondere das Zustellen der Treibwalzen (24) blockiert werden.

Über einen oder mehrere Sensoren (37) kann alternativ oder zusätzlich die Neigung der Antriebseinheit (15,16) und damit auch des Fahrzeugs (1) aufgenommen werden. Ferner können die Temperatur und andere physikalische Werte aufgenommen und von der Steuerung (38) verarbeitet werden. Die verschiedenen Messfunktionen können ggf. in einem Sensor (37), z.B. einem Beschleunigungssensor, zusammengefasst sein.

Die Steuerung (38) kann außerdem eine geeignete Schnittstelle, z.B. einen USB-Anschluss oder eine Bus-Schnittstelle, zur Kommunikation nach außen aufweisen. Dieser kann bei der Erstprogrammierung und ggf. bei späteren Wartungsarbeiten benutzt werden. Die Schnittstelle ist ebenfalls an der Steuerplatine angeordnet. Die Messeinrichtung (33) oder deren Teile können ebenfalls direkt auf der Steuerplatine angeordnet sein, wodurch der Kabelaufwand verringert und Platz im Gehäuse (40) gespart wird.

Die Antriebseinheiten (15,16) können über die Messeinrichtung (33) in ihrer Geschwindigkeit eigenständig gesteuert oder auch geregelt werden. Über eine geeignete Kommunikation ist auch eine Synchronisierung der Antriebsgeschwindigkeiten verschiedener Antriebseinheiten (15,16) möglich.

Über eine geeignete Betätigungseinrichtung (20) kann der Hilfsantrieb (2) gesteuert und ggf. in einer Setup-Prozedur eingerichtet werden. Hierbei kann neben der Fahrgeschwindigkeit auch die Fahrtrichtung gesteuert werden, was während der Fahrt geschehen kann und ein Lenken des Fahrzeugs (1) in beliebige Richtungen erlaubt. Hierfür können die Geschwindigkeiten der Antriebseinheiten (15,16) in einem geeigneten Verhältnis zueinander gesteuert werden, was auch die Drehrichtung einschließt. Für ein Drehen im Stand können die auf der linken und rechten Fahrzeugseite befindlichen Antriebseinheiten (15,16) in entgegengesetzten Richtungen drehen. Für eine Geradeausfahrt in Vorwärts- oder Rückwärtsrichtung werden z.B. die Antriebsgeschwindigkeiten synchronisiert. Für ein Lenken während der Fahrt wird die Geschwindigkeit der einen Antriebseinheit (15,16) höher als diejenige der anderen Antriebseinheit (16,15) eingestellt, wodurch das Fahrzeug (1) einen der Geschwindigkeitsdifferenz entsprechenden Bogen fährt. Durch Vergrößern oder Verkleinern der Geschwindigkeitsdifferenz kann der Lenkradius verändert werden, was insbesondere während der Fahrt geschehen kann. Hierdurch lässt sich das Fahrzeug (1) exakt rangieren.

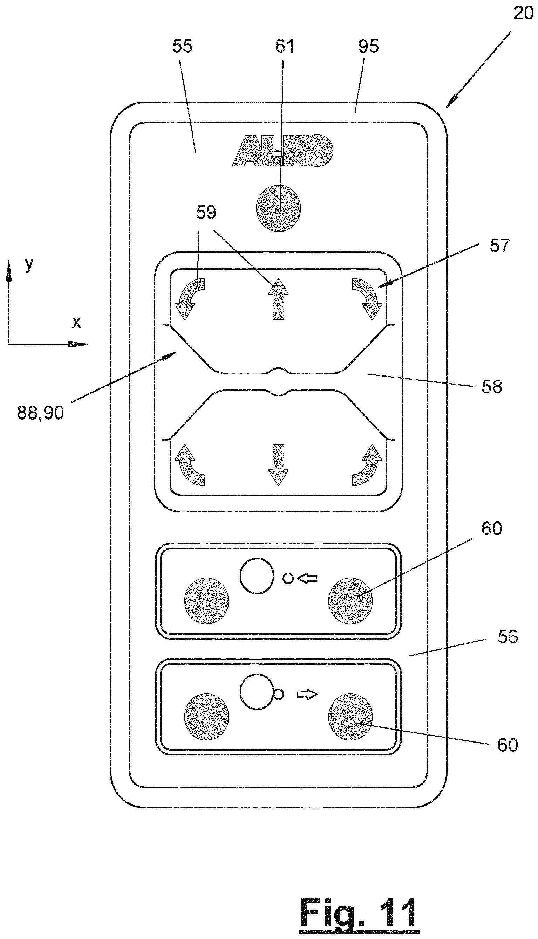

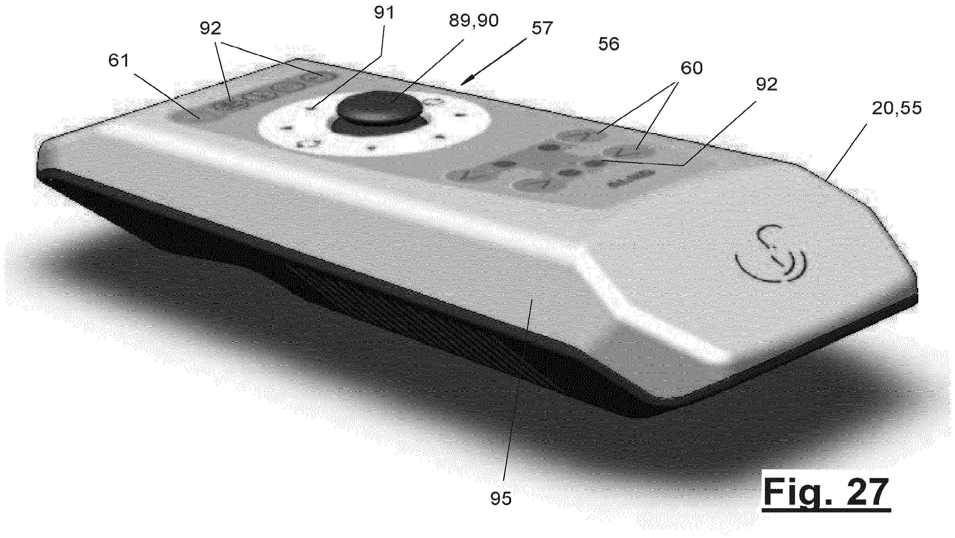

Figur 1 und 11 zeigen eine erste Variante der Betätigungseinrichtung (20). Figur 27 bis 31 offenbaren weitere Varianten der Betätigungseinrichtung (20). Diese ist z.B. als drahtlose Fernbedienung (55) und als frei bewegliches Handgerät mit einer internen Stromversorgung (93) über Batterie oder dgl. ausgebildet ist. Die Fernbedienung (55) steuert über die Kommunikationseinrichtungen (19,96) die Antriebseinheiten (15,16) und deren Motoren (26,27). Die Betätigungseinrichtung (20) oder Fernbedienung (55) weist ein Bedienfeld (56) auf, welches z.B. als Folientastatur ausgebildet und gegen Witterungseinflüsse resistent ist.

Das Bedienfeld (56) kann in mehrere Bereiche untergliedert sein. Es kann insbesondere ein Steuerfeld (57) zur eigenständigen und bei Bedarf gleichzeitigen Steuerung der Geschwindigkeit und/oder der Fahrtrichtung des Fahrzeugs (1) und des Hilfsantriebs (2) bzw. seiner Antriebseinheit(en) (15,16) aufweisen. Anzeigen (91) mit z.B. Pfeilen oder anderen Symbolen können auf dem Steuerfeld (57) die jeweiligen Funktionen, insbesondere die Fahrtrichtung, signalisieren. Das Steuerfeld (57) dient zum Lenken des Fahrzeugs (1) und ist entsprechend ausgebildet. Es kann gemäß Figur 11 als Mousepad (88) oder gemäß Figur 27 bis 31 als Joystick (89) gestaltet sein und mehrachsige Eingabe- und Bedienmöglichkeiten, insbesondere in x- und y-Richtung aufweisen.

Außerdem kann eine Bedienungshilfe (58) vorhanden sein, die unterschiedlich ausgebildet sein kann. Sie kann einerseits eine Hilfedatei nebst Anzeige aufweisen. In der gezeigten Ausführungsform von Figur 11 ist die Bedienungshilfe (58) als haptische Begrenzung zwischen einem oberen und einem unteren Bereich des Steuerfelds (57) ausgebildet. Im oberen Bereich wird durch Drücken von Steuerelementen (59), z.B. Tasten oder anderen berührungsempfindlichen Sensoren, die Vorwärtsfahrt in Richtung geradeaus oder nach links oder rechts gesteuert. Hierbei kann auch die Fahrgeschwindigkeit in geeigneter Weise gesteuert werden, z.B. durch die Stärke des Andrucks, die örtliche Lage der Druckstelle oder dgl.. Im unteren Feldbereich wird die Rückwärtsfahrt nebst Richtungen und ggf. Geschwindigkeit gesteuert. Die Bereiche sind durch einen Quersteg der Bedienungshilfe (58) getrennt, wobei in der Mitte eine Stegverbreiterung zur Lokalisierung der Mitte oder Neutrallage vorhanden sein kann. Über die Bedienungshilfe (58) lässt sich die Fernbedienung (55) ohne Blickkontakt bedienen, wobei der Bediener das Fahrzeug (1) und dessen Bewegungen im Blick halten kann.

In anderen Bereichen des Bedienfelds (56) können weitere Steuerelemente (60,61) vorhanden sein, die z.B. als Tastenelemente mit Schnappschalter ausgebildet sind und die andere Bestandteile des Hilfsantriebs (2) beaufschlagen, z.B. die Zustelleinrichtung (17) oder deren Zustellantrieb (42). Außerdem kann ein Ein-/Aus-Schalter (61) vorhanden sein.

Figur 27 bis 31 zeigen weitere Varianten der Betätigungseinrichtung (20), die ebenfalls als frei bewegliches, kabelloses Handgerät und als Fernbedienung (55) ausgebildet ist. Die Betätigungseinrichtung (20) hat hier wie im ersten Ausführungsbeispiel ein Gehäuse (95), an dessen Oberseite die Bedienelemente angeordnet sind und das in seinem Innenraum eine Steuerung (94) mit einer Steuerplatine nebst einer Energieversorgung (93), z.B. einer Batterie, aufnimmt. Auf der Platine (94) kann die Kommunikationseinrichtung (96), z.B. ein Funkmodul oder dgl. anderes beliebig geeignetes Element für eine drahtlose Kommunikation, angeordnet sein.

Das Steuerfeld (57) ist in den beiden hier gezeigten Varianten als Joystick (89) ausgebildet. Er ermöglicht mehrachsige Eingabe und Bedienmöglichkeiten, insbesondere in X- und Y-Richtung (vgl. Figur 11). Dies kann ein klassischer Joystick (89) mit einem mehrachsig und z.B. um 360° im Kreis um den Fußpunkt schwenkbarer Steuerstift sein, der im gezeigten Ausführungsbeispiel einen griffgünstig verbreiterten Kopf und eine Pilzform aufweist. Unter einem Joystick (89) wird im Sinne der Erfindung auch jedes andere mehrachsige Bedienungselement verstanden, z.B. eine Kugel in der Art eines bei Laptops eingesetzten Track-Balls, ein mouse-artiges Gerät oder dgl. mit entsprechender Sensorik.

Der am Fuß schwenkbar gelagerte und mit der Platine (94) verbundene Joystick (89) kann in der Art einer Windrose nach mehreren Richtungen bewegt werden. Anzeigen (91), z.B. Richtungspfeile, geben hierbei die über den Steuerbefehl erzeugte Fahrtrichtung an. Eine gerade Bewegung nach oben oder unten erzeugt eine gerade Vorwärts- oder Rückwärtsbewegung des Fahrzeugs (1). Eine Querbewegung nach links oder rechts führt zu einem Wenden des Fahrzeugs (1) auf der Stelle, wobei ggf. ein Fahrzeugrad (13) vorwärts und das andere rückwärts bewegt wird. Die jeweils durch zwei Bogenpfeile gekennzeichneten Symbole (91) geben hierbei die Drehrichtung nach links oder rechts an. Schwenkbewegungen des Fahrzeugs (1) während der Vorwärts- oder Rückwärtsfahrt nach links oder rechts, also ein Lenken des Fahrzeugs (1), wird durch Schrägbewegungen des Joysticks (89) bewirkt. Hierbei kann der Joystick (89) in beliebige Winkel innerhalb der Quadranten eines 360°-Kreises beginnend mit der Vorwärtsrichtung gekippt werden. Der Kippwinkel des Joysticks (89), z.B. in Richtung 45°, bewirkt eine Kurvenfahrt des Fahrzeugs (1) vorwärts und in diese 45°-Richtung. Der Lenkwinkel kann durch eine entsprechende Kippbewegung zwischen ca. 0° und ca. 90° beim Rechtsschwenk in Vorwärtsfahrt variieren. Entsprechendes gilt für die anderen drei Quadranten mit Linksschwenk in Vorwärtsfahrt bzw. Links- oder Rechtsschwenk bei Rückwärtsfahrt. Die Neigung bzw. der Kippwinkel des Joysticks (89) bestimmt hierbei den Lenkwinkel.

Eine entsprechende Steuerung und Lenkung des Fahrzeugs (1) geschieht auch bei dem in Figur 11 gezeigten Mousepad. Es funktioniert von der Richtungssteuerung her genauso wie ein Mousepad bei einem Laptop zur Steuerung der Cursorbewegungen am Bildschirm. Durch eine Vielzahl von Sensoren kann die Bewegungsrichtung des Fingers auf dem Mousepad bzw. der Sensorfläche (88) erfasst und in einen entsprechenden Lenkwinkel des Fahrzeugs (1) umgesetzt werden, wobei die linke und rechte Antriebseinheit (15,16) entsprechend angesteuert wird. Beim Mousepad (88) kann die Unterscheidung zwischen Vorwärts- und Rückwärtsfahrt durch die vom Quersteg geteilten oberen und unteren Feldhälften erfolgen.

In allen Varianten kann die Bedieneinrichtung (20) ein Steuerelement (90) für die Antriebsgeschwindigkeit haben. Beim Joystick (89) kann die Geschwindigkeitssteuerung durch die Länge des Schwenk- oder Kippwegs bestimmt werden. Je weiter der Joystick (89) radial nach außen geschwenkt wird, desto höher ist die Geschwindigkeit der beaufschlagten Antriebseinheit(en) (15,16). Beim Mousepad (88) wird in der vorerwähnten Weise das Steuerelement (90) durch eine Drucksensibilität der Sensorfläche realisiert. Je stärker der Bediener mit dem Finger auf das Mousepad (88) drückt, desto höher ist z.B. die Antriebsgeschwindigkeit.

Im Zusammenspiel der Elemente (88,89,90) des Steuerfelds (57) kann das Lenkverhalten des Hilfsantriebs (2) und des Fahrzeugs (1) optimal gesteuert werden. Durch den Winkel der Joystick- oder Fingerbewegung kann der Lenkwinkel eingestellt werden. Durch Variation der Geschwindigkeit kann zusätzlich die Kurvenfahrt beeinflusst werden. Wenn bei gegebenem Lenkwinkel die Geschwindigkeit erhöht wird, fährt das Fahrzeug (1) eine engere Kurve. Durch zwei- oder dreidimensionale Fingerbewegung auf dem Mousepad (88) oder am Joystick (89) kann das Fahrzeug (1) nach Sicht gelenkt werden. Die Umsetzung der Steuerbefehle in die Antriebsbewegung erfolgt einerseits über die Steuerung (94) der Betätigungseinrichtung (20) und andererseits über die Steuerung (38) der Antriebseinheiten (15,16) mittels leitungsgebundener oder drahtloser Kommunikation. Der Bediener kann dabei das Fahrverhalten des Fahrzeugs (1) beobachten und entsprechend durch Fingerbewegung reagieren und steuern, wobei eine intuitive Bedienung möglich ist. Von einer oder beiden Steuerung(en) (38) werden die Antriebseinheiten (15,16) entsprechend des gewünschten Lenkwinkels und der gewünschten Geschwindigkeit unterschiedlich angesteuert und bewegen das Antriebselement (24) mit unterschiedlichen Geschwindigkeiten sowie ggf. unterschiedlichen Drehrichtungen.

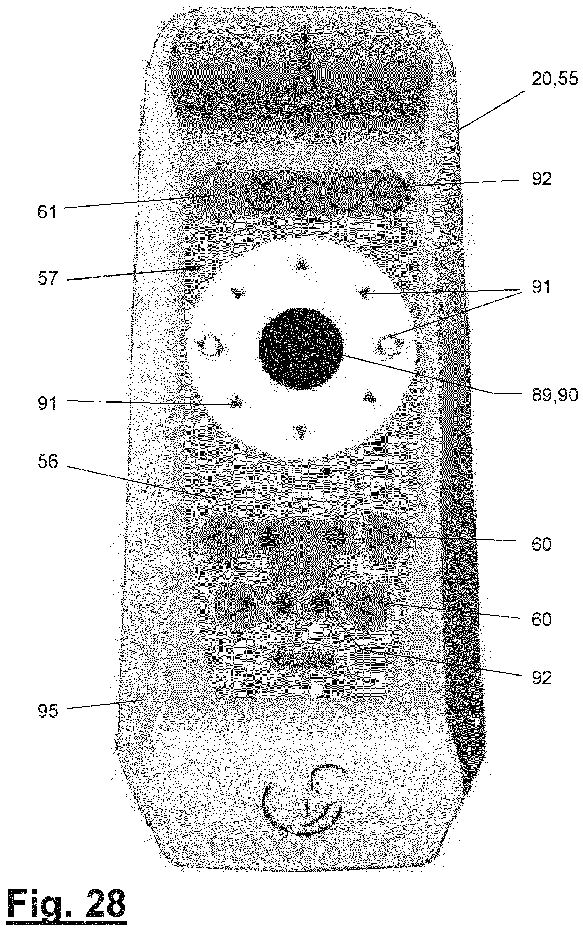

Die Betätigungseinrichtung (20) kann außerdem eine Anzeige (92) für diverse Informationen, insbesondere über Betriebszustände, aufweisen. Hierfür können mehrere unterschiedliche Anzeigeelemente mit Symbolen vorhanden sein. Bei den beispielsweise vier Steuerelementen (60) für die Zustellung der linken und rechten Antriebseinheit(en) (15,16) signalisieren z.B. deren Aufteilung und zugeordnete Leuchtelemente die Funktion bzw. die eingenommene Ruhe- oder Antriebsstellung und zwar für jede Antriebseinheit (15,16) getrennt. Andere Anzeigeelemente können eine Temperatur- oder Gewichtsanzeige, eine Signalisierung der Betriebsbereitschaft des Hilfsantriebs (2) oder dgl. angeben. Sie können insbesondere Warnsignale emittieren. Die Anzeige kann optisch und/oder akustisch oder in beliebig anderer Weise erfolgen. Im Gehäuse kann auch ein Lautsprecher oder ein anderes akustisches Signalelement angeordnet sein. Ein bei Figur 28 am oberen Gehäuseende sichtbares Symbol eine Zugdeichsel mit Anhängerkupplung signalisiert die Vorwärtsrichtung des Fahrzeugs (1). Ferner zeigt auch die Bedieneinrichtung (20) von Figur 27 bis 31 ein Steuerelement (61) zum Ein- und Ausschalten der Fernsteuerung und des Hilfsantriebs (2) .

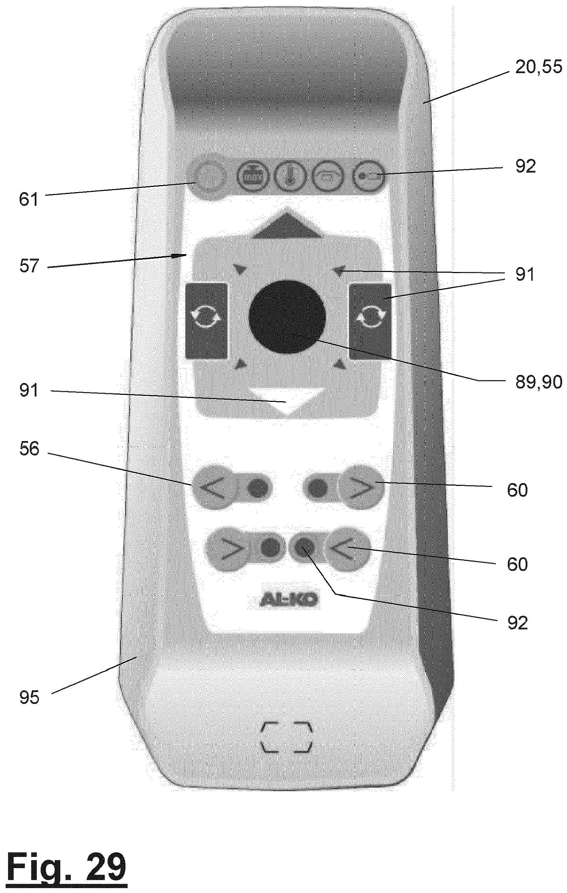

Figur 28 und 29 zeigen unterschiedliche Layouts des Steuerfelds (57) und des Bedienfelds (56), welches auch hier als Folientastatur oder in anderer beliebiger Weise ausgebildet sein kann. Insbesondere kann die Steuerfeldumgebung rund um den zentralen Joystick (89) und die Anzeige (91) unterschiedlich ausgebildet sein und z.B. einen Wohnwagen symbolisieren oder eine Kreis zeigen. Ggf. können auch z.B. bei der Variante von Figur 29 die Anzeigen (91) mit den Drehpfeilen für eine Wendefunktion des Fahrzeugs (1) zusätzlich eine Eingabefunktion haben und als Tasten ausgebildet sein. Der Joystick (89) hat hierbei entsprechend begrenzte Beweglichkeit und Funktion. Auch die ggf. vorhandene Antenne des Kommunikationseinrichtung (96) kann unterschiedlich ausgebildet und angeordnet sein.

In Abwandlung des beschriebenen Ausführungsbeispiels kann das Steuerelement (90) für die Antriebsgeschwindigkeit vom Mousepad (88) oder Joystick (89) funktional gelöst und abgesetzt werden. Zur Geschwindigkeitseinstellung können z.B. eine oder mehrere separate Tasten oder sonstige Eingabemittel vorhanden sein. Auf die Geschwindigkeitsbeeinflussung kann alternativ auch verzichtet werden.

Mit einer an der Betätigungseinrichtung (20) durchzuführenden Setup-Prozedur kann der Hilfsantrieb (2) am Fahrzeug (1) eingerichtet bzw. in Betrieb genommen werden. Über entsprechende programmierte Vorgaben kann das Verhalten der Steuerung (38) an das Fahrzeug (1) angepasst werden. Dabei wird z.B. über die Fernbedienung (55) mittels geeigneter Steuer- oder Eingabeelemente (nicht dargestellt) eingestellt, ob das Fahrzeug (1) eine oder mehrere Achsen (9) hat. Bei der Steuerung für eine Tandemachse kann z.B. das Wenden auf der Stelle mit Stillstand der Räder (13) auf einer Fahrzeugseite blockiert werden und nur ein Wenden mit geringem Radius durch entsprechendes Drehen aller Räder (9) erlaubt werden. Falls bei einem Tandembetrieb vier Antriebseinheiten (15,16) und damit vier Steuerplatinen benötigt werden, wäre auch eine automatische Erkennung und die automatische Umstellung der Betätigungseinrichtung (20) Fernbedienung auf Tandembetrieb möglich. Außer der Achsenzahl können auch andere Einbau- oder Betriebsparameter eingegeben werden, z.B. die Art der Stützeinrichtung (18), die Montagestellung, der Raddurchmesser etc..

Die Antriebseinheit (15,16) weist eine Zustelleinrichtung (17) mit einem vorzugsweise eigenen Zustellantrieb (42) auf. Die Zustellachse oder Wirkachse (43) des Zustellantriebs (42) ist vorzugsweise längs der Fahrzeuglängsachse (62) und in etwa mittig zu dem Antriebselement (24) ausgerichtet, welches seitlich versetzt neben den Motoren (26,27) und dem Getriebe (29) angeordnet ist. Die Zustellung erfolgt im gezeigten Ausführungsbeispiel linear, wobei alternativ eine Schwenkzustellung konventioneller Art, z.B. gemäß der eingangs genannten Entgegenhaltungen möglich ist.

Die Zustelleinrichtung (17) weist eine geeignete Erfassungseinrichtung (nicht dargestellt) zur Detektierung der Antriebsstellung am Fahrzeugrad und ggf. der zurückgezogenen Ruhestellung und ggf. auch der Zwischenstellungen auf. Dies kann z.B. eine Weg- und/oder Positionserfassung sein, die beliebig konstruktiv ausgebildet und an beliebig geeigneter Stelle angeordnet sein kann. Sie kann z.B. dem Antriebselement (24) oder dem Zustellantrieb (42) zugeordnet sein. Sie kann z.B. aus ein oder mehreren Endanschlägen, Weggebern, einer Motorstrommessung am Zustellantrieb (42) oder dgl. bestehen. Die Erfassungseinrichtung kann mit der Steuerung (38) und ggf. der Betätigungseinrichtung (20) verbunden sein. Sie kann auch bei manuell betätigten Zustelleinrichtungen (17) ohne eigenen oder abgeleiteten Antrieb eingesetzt werden.

Der gezeigte lineare Zustellantrieb (42) greift an einem stationären Element der Stützeinrichtung (18), z.B. an einer schmalen Konsole (49) an, die sich z.B. in den Varianten von Figur 1 bis 19 auf der vom Fahrgestell (3) abgewandten Seite des Gehäuses (40) befindet. Diese in Figur 1 bis 19 gezeigte Ausführung der Konsole (49) fällt nicht unter den Anspruch 1.

Der Zustellantrieb (42) weist z.B. mindestens einen bevorzugt elektrischen Motor (44) auf, der ebenfalls geschützt im Gehäuse (40) untergebracht und z.B. parallel zu den Antriebsmotoren (26,27) ausgerichtet ist. Der Zustellantrieb (42) besitzt ferner mindestens ein Stellelement (46,47) zur Übertragung der Antriebskräfte. Dies kann in beliebiger Weise ausgebildet sein. Im gezeigten Ausführungsbeispiel ist das eine Stellelement (46) als Spindel ausgebildet, welche vom Lagerteil (25) nach hinten und gegen die Zustellrichtung ragt. Am einen Ende ist die Spindel (46) über ein Getriebe (45) mit dem Motor (44) verbunden, wobei das ein- oder mehrstufige Getriebe (45) im hohlen Gehäuse des Lagerteils (25) angeordnet sein kann. Am anderen Ende steht die Spindel (46) mit einer Spindelmutter (47) im Eingriff, die an der Konsole (49) befestigt ist.

Die Spindelmutter (47) ist in einem Gehäuse untergebracht, welches eine mit einer Kappe verschließbare Zugangsmöglichkeit zur Notentriegelung und zum Lösen des Spindeltriebs aufweist. Die vom Motor (44) angetriebene Spindel (46) stützt sich an der Spindelmutter (47) und an der Konsole (49) ab und schiebt je nach Drehrichtung die ganze Antriebseinheit (15,16) mit dem Antriebsteil (24) vor und zurück. Der Zustellantrieb (42) kann eine Endabschaltung, z.B. einen Motorstromschalter, aufweisen, die in der Treibposition und bei Erreichen der vorgesehenen Anpresskraft bzw. Motorstromhöhe den Zustellantrieb (42) abschaltet.

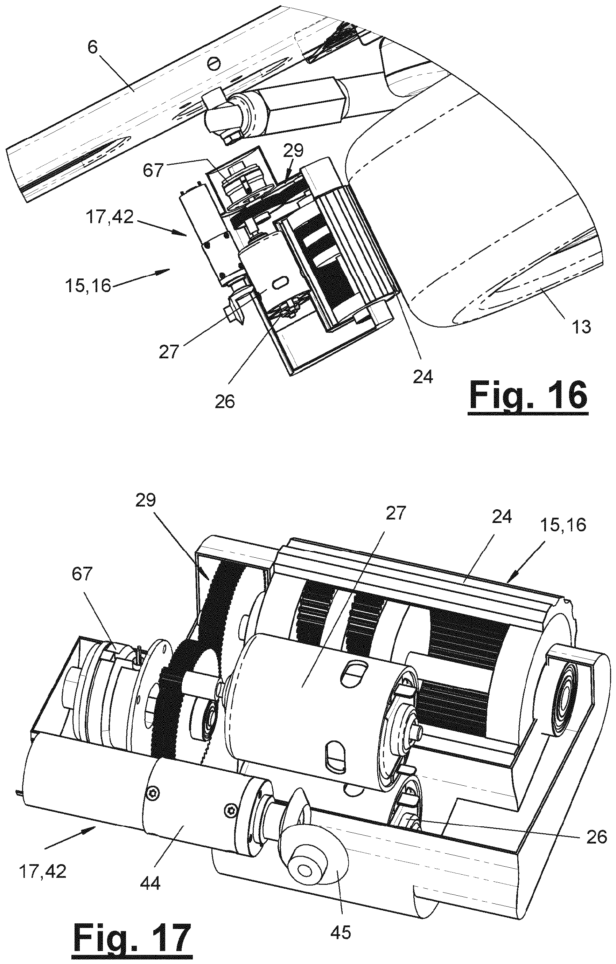

Die Antriebsstellung kann in geeigneter Weise verriegelt werden, was z.B. durch eine Selbsthemmung des Spindeltriebs möglich ist. Alternativ kann eine separate Bremse (67), z.B. eine steuerbare Magnetbremse, vorhanden sein. Eine solche Bremse kann auch auf den Antriebsstrang wirken und das Getriebe (29) oder das Antriebselement (24) blockieren. Fig. 16 und 17 zeigen eine solche Bremsanordnung (67). Das Getriebe kann bei Fehlen einer Selbsthemmung einen besseren Wirkungsgrades haben.

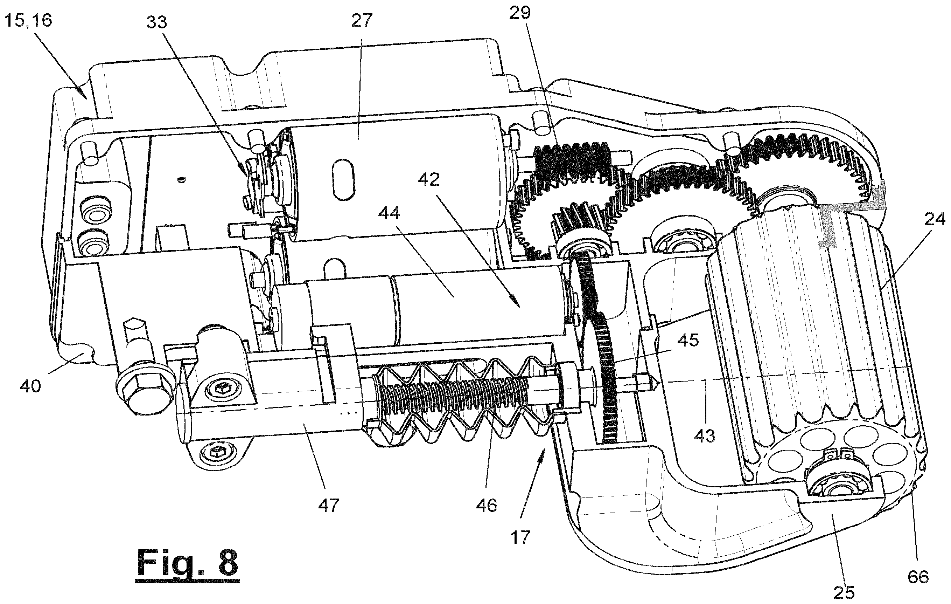

Die Spindel (46) kann außerdem gemäß Figur 8 mit einer schützenden Umhüllung, z.B. einem Balg, umgeben sein. Der Zustellantrieb (42) ist ebenfalls an die Steuerung (38) angeschlossen und kann hierüber mit der Betätigungseinrichtung (20) bedient werden.

Die Konsole (49) besitzt eine Führung (48) zur beweglichen Lagerung und Abstützung der Antriebseinheit (15,16). Dies können z.B. mehrere parallele Langlochführungen sein, in denen am Gehäuse (40) befestigte Führungsstifte reibungsarm geführt sind. Die Führungen (48) sind entlang der Zustellachse (43) ausgerichtet. Im gezeigten Ausführungsbeispiel liegt eine lineare Zustellung mit einer Ausrichtung parallel oder leicht schräg zur Fahrzeuglängsachse vor. Alternativ ist eine Schwenkzustellung oder eine kombinierte lineare und rotatorische Zustellung möglich, wobei sich die Zustellachse (43) und die Führung (48) entsprechend anpassen. In Figur 8 ist die Konsole (49) der Übersicht halber nicht dargestellt.

Die Konsole (49) kann schmal bzw. dünnwandig bauen und befindet sich im Freiraum zwischen der Spindel (46) und der benachbarten Gehäusewand. Die Konsole (49) ist plattenförmig ausgebildet und kann eine abgekantete und an die Gehäusekontur angepasste Form haben.

Im Gehäuse (40) sind im wesentlichen alle Komponenten der Antriebseinheit (15,16) geschützt und gegen Umwelteinflüsse abgedichtet untergebracht, wobei lediglich das Antriebselement (24) und die Stellelemente (46,47) der Zustelleinrichtung (17) außerhalb angeordnet sind. Dies reduziert und vereinfacht den Dichtungsaufwand.

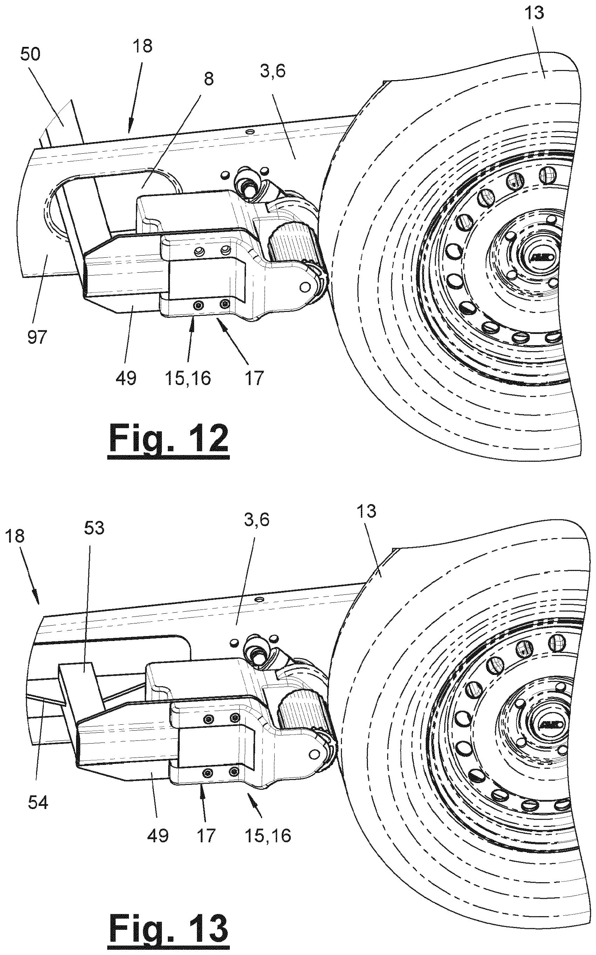

Die Stützeinrichtung (18) kann in verschiedener Weise ausgebildet sein. Figur 1 bis 4 und 6 bis 9 zeigen eine universelle Bauweise mit einem Querträger (50), mit dem die Konsolen (49) beidseits des Fahrzeugs (1) starr verbunden sind, z.B. über formschlüssige Ausnehmungen und Klemmmittel. Der Querträger (50) kann seinerseits durch Öffnungen (8) in den Längsträgern (6) gesteckt und dort befestigt und abgestützt sein. Figur 12 zeigt ebenfalls eine solche Bauweise. Hierbei stützt der Querträger (50) die Antriebseinheiten (15,16) gemeinsam am Fahrgestell (3) ab.

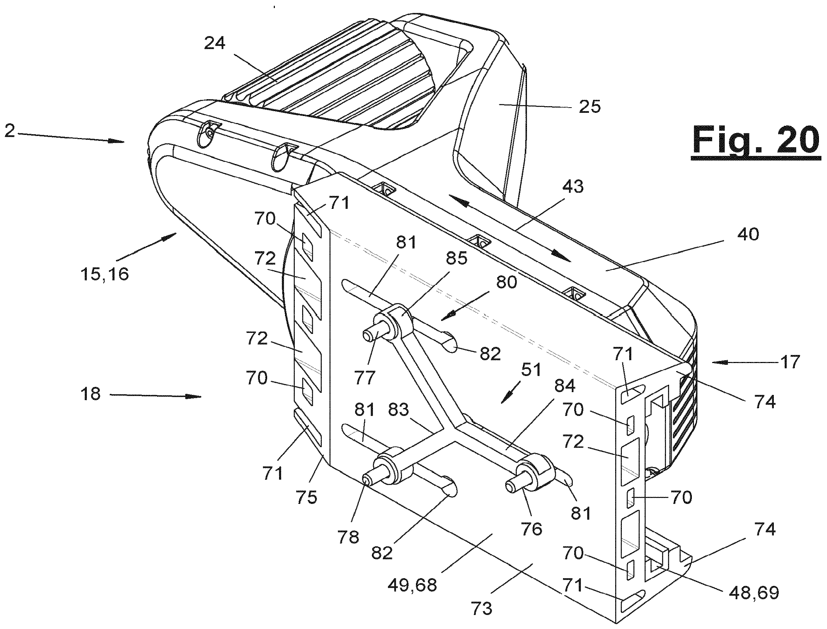

Alternativ ist eine Einzelabstützung der Antriebseinheiten (15,16) am Fahrgestell (3) möglich. Diese hat eigenständige erfinderische Bedeutung und kann auch mit anderen bekannten Hilfsantrieben (2) und Antriebselementen (15,16), z.B. gemäß der EP 0 827 898 A1, EP 1 394 024 A2 oder EP 1 842 754 A2 ausgeführt werden. Für die Einzelabstützung kann z.B. gemäß Figur 13 ein Anbauteil (54), z.B. eine Anbauplatte, vorhanden sein, die am Fahrgestell (3), z.B. an der Außenwand eines Längsträgers (6), ggf. im Öffnungsbereich, in geeigneter Weise starr befestigt und abgestützt wird und die über einen Verbindungsarm (53) mit der Konsole (49) verbunden ist. Figur 20 bis 26 zeigen eine weitere Variante hierzu mit einem starren Anbau einer als Profilteil (68) ausgebildeten Konsole (49) am Fahrgestell (3), insbesondere an den Längsträgern (6). Der Anbau erfolgt in allen Varianten am vertikalen Mittelsteg (97) des Längsträgers (6). Das Profilteil (68) hat eine lineare Führungsfunktion für das Antriebselement (15,16).

Die Stützeinrichtung (18) und das Fahrzeug (1) können in den verschiedenen Varianten jeweils definierte Anbauschnittstellen (51,52) haben, die in der Anordnung und Formgebung aufeinander abgestimmt sind und für eine vorgegebene und definierte Anbau- und Montagesituation sorgen. Die Anbauschnittstellen (51,52) können hierbei auch einen Verstellraster oder eine andere Verstellmöglichkeit haben, um für unterschiedliche Fahrzeugradanordnungen oder Fahrgestellausführungen unterschiedliche Anbaustellen der zugehörigen Antriebseinheit (15,16) bereitzustellen. Auch dies hat eigene erfinderische Bedeutung und eignet sich zum Einsatz mit vorbekannten Hilfsantrieben (2).

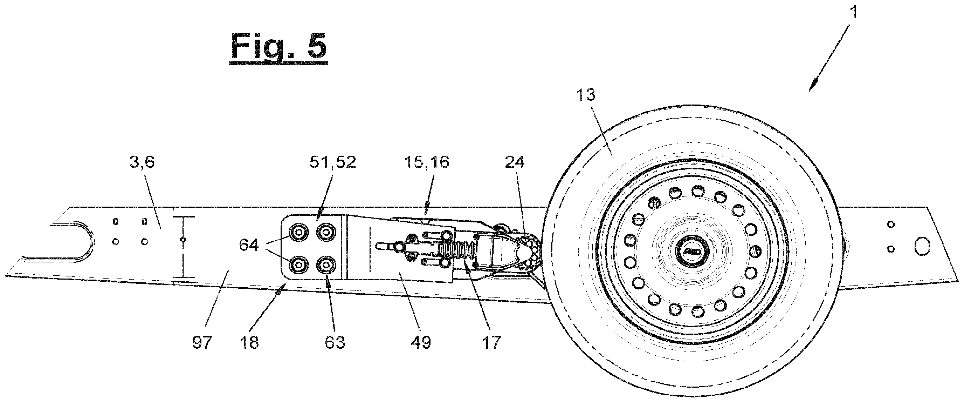

Figur 5 zeigt eine solche Anordnung mit einer Adaption der Anbauschnittstellen (51,52) über eine Napfverschraubung (63) mit mehreren Verbindungsstellen. Hierbei haben z.B. der Mittelsteg (97) des Längsträgers (6) und eine Anbauplatte (54) der Stützeinrichtung (18) aneinander angepasste napfartige oder kegelstumpfartige Wandprägungen (64), die in Montagestellung formschlüssig und mit gegenseitiger Abstützung ineinander greifen und mittels einer durch eine Zentralbohrung gesteckten Schraube oder einem anderen Befestigungsmittel zusammengespannt und gesichert werden. Eine solche Napfverschraubung kann z.B. entsprechend der DE 93 04 926 U1 oder der EP 0 479 115 B1 ausgebildet sein.

Die Näpfe und Verbindungsstellen haben eine spezielle Verteilung und Anordnung, die einen Anbau unpassender Hilfsantriebe oder Antriebseinheiten (15,16) verhindert. Durch eine Mehrfachanordnung von Prägungen (64) kann auch ein Verstellraster realisiert werden. Die Napfverschraubungen (63) sind vorzugsweise so ausgebildet und ausgerichtet, dass ein Anbau anderer Befestigungselemente und Anbauplatten (54) von Fremdherstellern nicht oder nur schwer möglich ist. Die Anbauschnittstellen (51,52) sichern den Systembezug und erlauben nur den Anbau passender Antriebseinheiten (15,16). Die Anbauschnittstelle (52) am Fahrzeug (1) ist außerdem so gewählt und positioniert, dass sich eine optimale Anbindung und Abstützung der Antriebseinheit (15,16) ergibt.

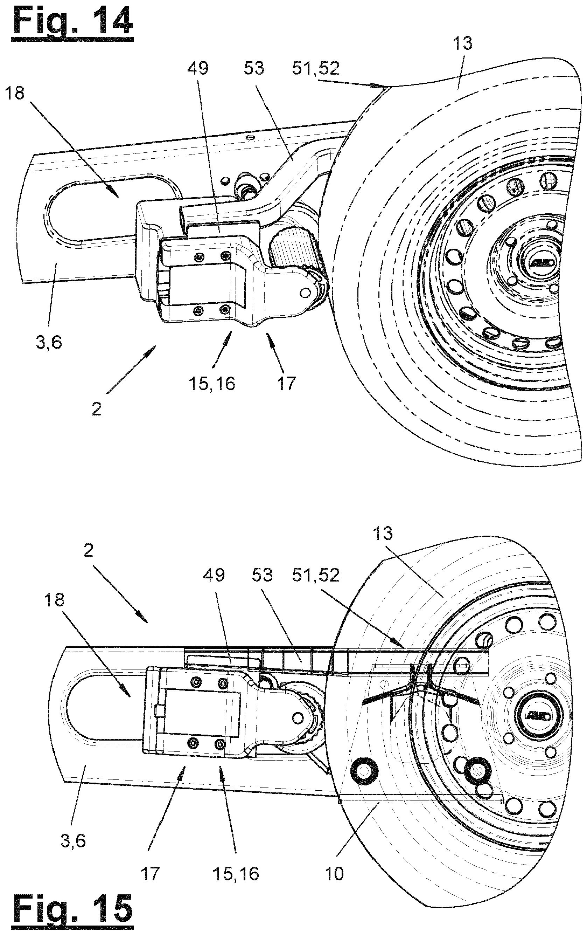

Figur 14 und 15 zeigen eine andere Variante der Stützeinrichtung (18) und der Anbauschnittstellen (51,52). In diesem Ausführungsbeispiel ist die Konsole (49) über einen im Wesentlichen längs der Fahrzeugachse (62) gerichteten Verbindungsarm (53) mit dem Achsträgerschild (10) verbunden, der zu diesem Zweck einen geeigneten Anschlussflansch (65) aufweist, der z.B. an dessen freier Oberseite angeordnet ist. Figur 2, 4 und 18 zeigen diesen nach außen abgekanteten Flansch (65). Der Verbindungsarm (53) kann abgekröpft sein und weist am freien Ende eine Anbauschnittestelle (51) auf. Er hält die Antriebseinheit (15,16) schwebend in der vorgesehenen Position. Hierbei bleibt ein ausreichender Freiraum für den Stoßdämpfer (12) und andere Achs- oder Radteile, was auch in den anderen Ausführungsbeispielen vorgesehen ist.

Die Anbauschnittstelle (52) des Fahrzeugs (1) kann in diesem Fall am Anschlussflansch (65) vorhanden sein. Hierbei können bei den adaptierten Anbauschnittstellen (51,52) Stützbolzen oder dgl. die Zustell- und Antriebskräfte abstützen und mit einem entsprechenden Lochbild korrespondieren, wobei auch ein Verstellraster gebildet sein kann. Andere fahrzeugseitige Anbindungsmöglichkeiten bestehen direkt an der Achse (9) oder an einer anderen Stelle des Achsbocks oder Achsträgerschilds (10).

Die Stützeinrichtung (18) kann Register aufweisen. Die Kraftwirkungsrichtung kann bevorzugt auf die Mitte der Radachse (9) gehen. Die Anbindungsstelle (51,52) der Stützeinrichtung (18) kann auch für andere Bauteile genutzt werden, z.B. für Stützen zur Achsentlastung. Ferner kann eine Verstellmöglichkeit quer zum Fahrgestell vorgesehen sein zur Anpassung an unterschiedliche Spurweiten der Anhänger (1).

Figur 16 und 17 zeigen Varianten in der Ausbildung eines Antriebselements (15,16). Hier sind z.B. die Antriebsmotoren (26,27) quer zur Fahrzeuglängsachse ausgerichtet und erstrecken sich parallel zur Treibwalze (24). Auch die Zustelleinrichtung (17) mit dem Zustellantrieb (42) sind quer zur Fahrzeuglängsachse eingebaut. Das Getriebe (29) ist entsprechend anders ausgerichtet und angeordnet. Figur 17 zeigt außerdem die Möglichkeit, dass Getriebestufen im Inneren eines hohlen Abtriebselements (24) angeordnet sein können. Die Stützeinrichtung (18) und die Zustelleinrichtung (17) können in entsprechender Weise abgeändert und angepasst sein.

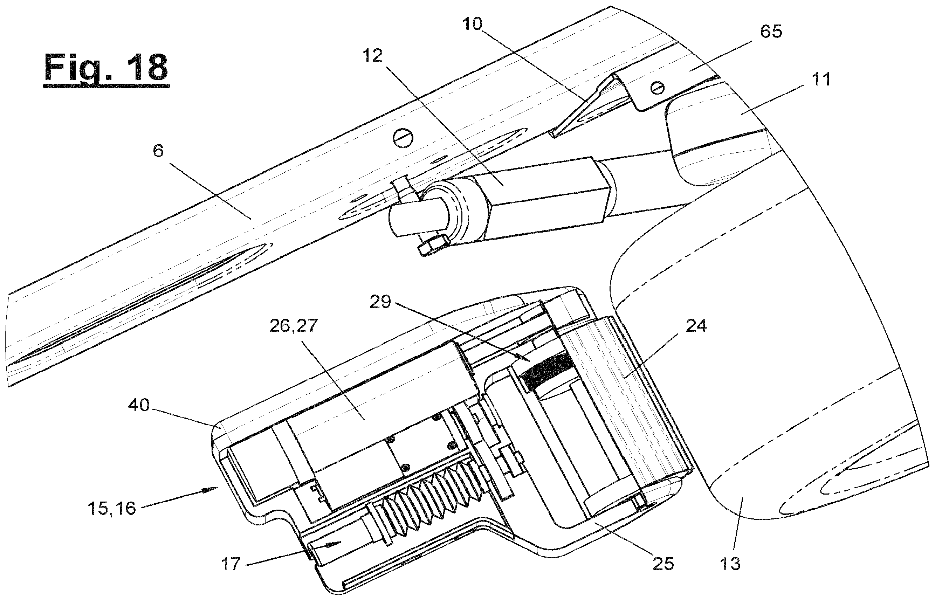

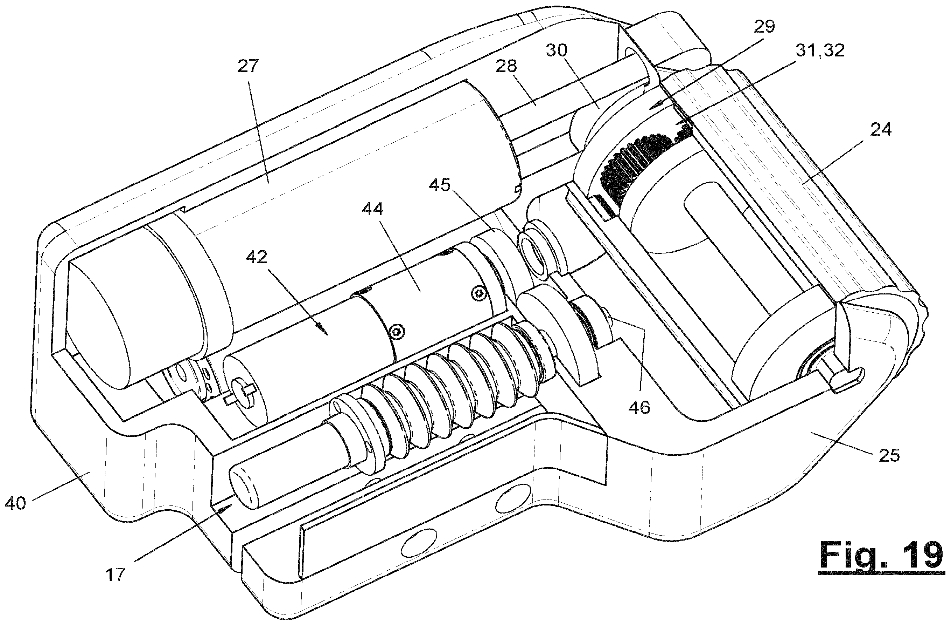

Figur 18 und 19 zeigen eine weitere Variante der Antriebseinheit (15,16), wobei hier die Anordnung der Motoren (26,27) und der Zustelleinrichtung (17) wie im ersten Ausführungsbeispiel von Figur 1 bis 9 längs der Fahrzeuglängsachse gerichtet ist. Das Getriebe (29) ist z. T. im Antriebselement (24) untergebracht. Hier können z. B. die II. und III. Getriebestufe (31,32) angeordnet sein, wobei sich die I. Getriebestufe (30) außerhalb. Durch diese Getriebeform verkürzt sich die Länge der Antriebseinheit (15,16), die dadurch noch kompakter baut und sich leichter unterbringen lässt. In Figur 18 ist die Stützeinrichtung (18) der Übersicht halber nicht dargestellt. Sie kann wie in einem der anderen Ausführungsbeispiele ausgebildet sein.

Figur 20 bis 26 zeigen eine besondere und eigenständig erfinderische Ausgestaltung einer Stützeinrichtung (18) für einen Hilfsantrieb (2), die sich besonders für die vorbeschriebene Ausführungsform des Hilfsantriebs (2) und der Antriebselemente (15,16) eignet, die sich aber auch mit anderen konventionellen Hilfsantrieben (2) in vorteilhafter Weise verwirklichen lässt.

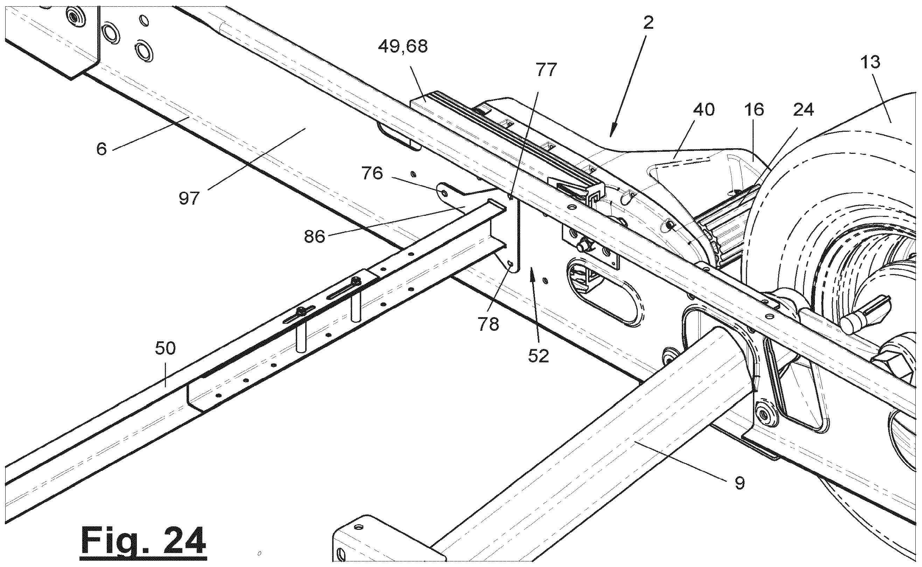

Wie Figur 20 bis 23 im Detail und in verschiedenen Ansichten verdeutlichen, weist die Stützeinrichtung (18) eine Konsole (49) zur Verbindung mit dem Fahrgestell (3), und dessen Längsträgern (6), auf, wobei die Konsole (49) gemäß Anspruch 1 als Profilteil (68) bzw. als Konsolenprofil ausgebildet ist. Das Profilteil (68) dient einerseits der linearen Führung eines Antriebselements (15,16) und andererseits zur Abstützung des Hilfsantriebs (2) am Fahrgestell (3). Die Anbaustelle am Fahrgestell (3) kann in Längsrichtung verändert werden und erlaubt eine Anpassung an unterschiedliche Raddurchmesser, Achs- und Lenkergeometrien etc.. Die Anbausituation wird in Figur 24 bis 26 verdeutlicht.

Das Profilteil (68) ist formstabil ausgebildet und besteht aus einem geeigneten Material, z.B. Metall, insbesondere Leichtmetall. Es kann als Gussteil oder als Strangpressprofil ausgebildet sein. Alternativ sind andere ausreichend stabile Materialien, z.B. verstärkte Kunststoffe oder dgl. mit einer Ausbildung als Spritzteil etc. möglich.

Das Profilteil (68) weist ein Bodenteil (73) sowie z.B. zwei Seitenwände (74) auf und besitzt mehrere Kanäle (69,70,71,72), die in Längsrichtung des Profilteils (68) verlaufen. Dies können innere und/oder äußere Kanäle sein.

Das Profilteil (68) kann einen seitlich und stirnseitig offenen Führungskanal (69) für eine lineare Führung und Lagerung (48) des Antriebselements (15,16) aufweisen. Der Führungskanal (69) kann z.B. von hinterschnittenen Nuten in den Seitenwänden (74) gebildet sein und erstreckt sich in Richtung der Zustellachse (43) der Zustelleinrichtung (17).

Das Antriebselement (15,16) weist an geeigneter Stelle, z.B. an der Innen- oder Unterseite seines Gehäuses (40), ein Lagerelement (87) auf, welches mit dem Führungskanal (69) in formschlüssigen Eingriff tritt, der eine Linearbewegung in Achsrichtung (43) erlaubt. Das Lagerelement (87) kann z.B. eine Gleitlagerung sein, die bevorzugt aus Kunststoff besteht. Der Führungskanal (69) kann eine Beschichtung oder eine Einlage aufweisen, die ebenfalls aus Kunststoff bestehen kann. Diese Art der Kunststoff-Gleitlagerung ist besonders reibungsarm und leise und erlaubt ein sicheres Anstellen des Antriebselements (24) am Fahrzeugrad (13).

Die bevorzugt lineare Zustelleinrichtung (17) kann von beliebiger Art und Ausbildung sein. Sie ist in den Zeichnungen nur schematisch dargestellt. Der Zustellantrieb kann sich im Inneren des Gehäuses (40) verbergen und tritt mit einem externen Treibteil, z.B. einer Zahnstange oder dgl., am Profilteil (68) oder einem anderen Teil der Stützeinrichtung (18) in Eingriff.

Bei der in Figur 20 bis 23 gezeigten Ausführungsform ist das gesamte Antriebselement (15,16) gekapselt in einem Gehäuse (40) untergebracht. Lediglich das Abtriebselement (24) liegt frei und wird vom ebenfalls zum Gehäuse (40) gehörigen Lagerteil (25) bzw. der hierdurch gebildeten Lagergabel gehalten.

Das Profilteil (68) kann mindestens einen innenliegenden und bevorzugt im Bodenteil (73) angeordneten Kanal (70,71,72) aufweisen. Diese Kanäle (70,71,72) öffnen sich zumindest stirnseitig am Profilteil (68), wobei das Bodenteil (73) an einer Stirnseite eine Schräge (75) aufweisen kann, an der Kanalöffnungen freiliegen. Einer oder mehrerer der Kanäle (71,72) kann als Kabelkanal zur Führung und zum Schutz von Versorgungs- und Steuerkabeln des Hilfsantriebs (2) dienen. Im oder am Kabelkanal (71,72) kann auch eine Zugentlastung für Kabel oder Leitungen angeordnet sein.

Das Profilteil (68) weist am Bodenteil (73) eine Aufnahme (80) für mehrere Verbindungselemente (76,77,78) auf, die dem starren Anschluss am Fahrgestell (3) dienen und die eine antriebseitige Anbauschnittstelle (51) verwirklichen können. Die Verbindungselemente (76,77,78) können z.B. als Schrauben oder Bolzen ausgeführt sein und können am Ende einen verbreiterten Kopf (79), z.B. ein Schraubkopf, aufweisen.

Die Aufnahme (80) ermöglicht eine axial einstellbare bzw. verstellbare Befestigung am Fahrgestell (3) und eine optimale Positionierung gegenüber dem Fahrzeugrad (13). Sie ist bevorzugt als Schlitzführung ausgebildet und weist mehrere, z.B. drei parallele Schlitze (81) in der Außenwand des Bodenteils (73) auf, die zumindest an einer Stelle eine im Durchmesser vergrößerte Einführöffnung (82) für den Kopf oder Schraubkopf (79) aufweisen. Die Schlitze (81) erstrecken sich bevorzugt in Richtung der Zustellachse (43) und sind im Bodenbereich von Kanälen (70) angeordnet, die sich hierüber nach außen öffnen. Die Schlitze (81) können dabei in der Breite und Länge des Profilteils (68) zueinander versetzt angeordnet sein, um eine breite Anschlussbasis für die darin geführten und in gleicher Zahl vorhandenen Verbindungselemente (76,77,78) zu bieten. Die Verbindungselemente (76,77,78) können mit ihren Köpfen (79) durch die Einführöffnungen (32) in die Kanäle oder Schraubkanäle (70) eintauchen und in diesen in der Art von Kulissensteinen entlang geschoben werden, wobei der Bolzenschaft im Schlitz (81) geführt ist und der Kopf (79) sich an der Schlitzwandung zur Aufnahme der Befestigungs- und Spannkräfte abstützt.

Zur Befestigung des Konsolenteils (68) und der Verbindungselemente (76,77,78) kann eine Stützplatte (86) vorhanden sein, die gemäß Figur 24 an der Innenseite, insbesondere dem Mittelsteg (97), eines Längsträgers (6) angeordnet ist und die entsprechende Durchgangsbohrungen für die Verbindungselemente (76,77,78) aufweist. Auch der Steg (97) des Längsträgers (6) hat solche Durchgangsbohrungen. Die Verteilung und Anordnung dieser Durchgangsbohrungen kann eine fahrzeugseitige Anbauschnittstelle (52) bilden. Die Schäfte, insbesondere Schraubbolzen, der Verbindungselemente (76,77,78) können Muttern oder andere Spannelemente zum Spannen und Sichern der Verbindung tragen.

Die Stützeinrichtung (18) kann ein Anbauteil (83) zur Bildung einer passenden Anbauschnittstelle (51) des Hilfsantriebs (2) aufweisen. Mit dem Anbauteil (83) kann ggf. das Profilteil (68) vom Längsträger (6) distanziert werden. Das Anbauteil (83) kann ferner eine Montagehilfe zur schnittstellengerechten Positionierung der Verbindungselemente (76,77,78) gegenüber der fahrzeugseitigen Anbauschnittstelle (52) bilden. Das Anbauteil (81) kann hierfür einen Träger (84) mit mehreren schnittstellengerecht angeordneten Positionierelementen (85) für die Verbindungselemente (76,77,78) aufweisen. Die Positionierelemente (85) können Abstandshülsen für die Aufnahme und Durchführung der Verbindungselemente (76,77,78) sein. Der Träger (84) kann mehrere untereinander verbundene Arme aufweisen, die z.B. entsprechend der Schlitzverteilung eine Y-Form haben und die am Ende die Abstandshülsen (85) tragen. Alternativ kann der Träger (84) plattenartig oder in anderer Weise ausgebildet sein.

Die Zahl und Anordnung der Verbindungselemente (76,77,78) und der Schlitze (82) kann gegenüber dem dargestellten Ausführungsbeispiel variieren. Für eine statisch bestimmte Abstützung empfiehlt sich die gezeigte Dreier-Anordnung. Alternativ kann die Element- und Schlitzzahl auch größer oder kleiner sein. Ggf. ist nur ein Schlitz (82) für ein einzelnes Verbindungselement zum Fixieren des Profilteils (68) am Fahrgestell (3) vorhanden, wobei ansonsten formschlüssige Führungselemente, z.B. verteilt angeordnete und längs der Zustellachse (43) ausgerichtete Nut- und Feder-Anordnungen oder dgl. zwischen Bodenteil (73) und Außenseite des Längsträgers (6) vorhanden sind.

Wie Figur 24 bis 26 verdeutlichen, kann die Stützplatte (86) außer ihrer Befestigungsfunktion eine Zusatzfunktion haben. Sie kann z.B. den stirnseitigen Abschluss eines Querträgers (50) aufweisen und mit diesem starr verbunden sein. Über den Querträger (50) mit den beidseitigen Stützplatten (86) können die im Fahrbetrieb des Hilfsantriebs (2) auftretenden Kräfte und Momente auch besser aufgefangen und abgestützt werden. Hierüber kann an der Krafteinleitungsstelle außerdem eine Stabilisierung der Längsträger (6) stattfinden, die zwischen der Stützplatte (86) und dem Bodenteil (73) bzw. dem evtl. vorhandenen Anbauteil (83) eingespannt sind.

Die Anbaustelle des Antriebselements (15,16) und des Querträgers am Längsträger (6) befindet sich in einem stabilen Trägerbereich. Sie ist unabhängig von evtl. Öffnungen im Trägersteg (97) und kann sich neben diesen befinden. Figur 24 bis 26 zeigen die Anbausituation an einem Anhänger (1) mit Schräglenkerachse (9), Radschwinghebeln (11) und Stoßdämpfern (12).

Abwandlungen der gezeigten und beschriebenen Ausführungsformen sind in verschiedener Weise möglich. Die vorbeschriebenen Komponenten des Hilfsantriebs (2) können abweichend von den Ausführungsbeispielen in anderer Weise, Ausbildung und Anordnung miteinander kombiniert werden. Sie können außerdem entfallen oder durch konventionelle Varianten ersetzt werden. Dies betrifft z.B. die Motor- und Getriebeausbildung und -anordnung. Die Antriebseinheit (15,16) kann in konventioneller Weise ausgebildet sein und nur einen Antriebsmotor aufweisen. Der Motor muss auch nicht elektrisch sein. Diese Ausbildung kann mit einzelnen oder allen anderen gezeigten Komponenten des Hilfsantriebs (2) kombiniert werden.

Das Antriebselement (24) kann mehrfach vorhanden sein und in anderer Weise ausgebildet sein, wobei es z.B. einen kompressiblen Mantel, insbesondere einen Gummimantel, besitzt. Es kann unter Verzicht auf den Tragarm (25) einseitig am Gehäuse (40) gelagert sein.

Die Betätigungseinrichtung (20) kann am Fahrzeug (1) fest installiert sein. Sie kann über eine Leitung an die Steuerung(en) (38) angeschlossen sein. Die Betätigungseinrichtung (20) kann ferner in Kombination mit konventionellen Hilfsantrieben eingesetzt werden, die z.B. nach dem eingangs genannten Stand der Technik ausgebildet sind. Diese können außerdem eine schwenkbare Zustelleinrichtung haben. Auch eine manuelle Zustellung, ggf. mit Federunterstützung, oder ein vom Reibrollenantrieb abgeleiteter Zustellantrieb sind möglich.

Die in eine Antriebseinheit (15,16) integrierte Steuerung (38) hat eigenständige erfinderische Bedeutung und kann auch bei anderen Konstruktionen mit Einzelmotor oder anderer Ausbildung, insbesondere auch nach dem Stand der Technik, eingesetzt werden. Entsprechendes gilt für die Anordnung einer Kommunikationseinrichtung (19) in der Antriebseinheit (15,16). Alternativ können die Antriebseinheiten (15,16) eigene externe Steuerungen oder eine gemeinsame externe oder interne Steuerung aufweisen, die mit der Betätigungseinrichtung (20) kommuniziert. Auch die Anordnung einer Messeinrichtung (33) an oder in einer Antriebseinheit (15,16) hat eigene Erfindungsqualität. Das gleiche gilt für die Ausbildung der Messeinrichtung (33) und ihrer Messelemente (34,35,36,37).

### BEZUGSZEICHENLISTE

- 1: Fahrzeug, Anhänger
- 2: Hilfsantrieb, Rangierantrieb
- 3: Fahrgestell, Chassis
- 4: Zugdeichsel
- 5: Anhängekupplung
- 6: Längsträger
- 7: Querträger
- 8: Öffnung
- 9: Achse
- 10: Achsträgerschild
- 11: Radlenker
- 12: Stoßdämpfer
- 13: Rad, Fahrzeugrad
- 14: Aufbau
- 15: Antriebseinheit links
- 16: Antriebseinheit rechts
- 17: Zustelleinrichtung
- 18: Stützeinrichtung
- 19: Kommunikationseinrichtung, Funkmodul
- 20: Betätigungseinrichtung
- 21: Energieversorgung
- 22: Batterie
- 23: Steckdose
- 24: Antriebselement, Treibwalze
- 25: Lagerteil, Lagergabel
- 26: Motor
- 27: Motor
- 28: Abtriebswelle
- 29: Getriebe
- 30: Getriebestufe I
- 31: Getriebestufe II
- 32: Getriebestufe III
- 33: Messeinrichtung
- 34: Geschwindigkeitsmesser
- 35: Encoder, Encoderscheibe
- 36: Sensor, Optokoppler
- 37: Sensor, Beschleunigungssensor
- 38: Steuerung, Platine
- 39: Kabelanschluss
- 40: Gehäuse
- 41: Dichtung
- 42: Zustellantrieb
- 43: Zustellachse
- 44: Motor
- 45: Getriebe
- 46: Stellelement, Spindel
- 47: Stellelement, Spindelmutter
- 48: Führung, Lagerung
- 49: Konsole
- 50: Querträger
- 51: Anbauschnittstelle Stützeinrichtung
- 52: Anbauschnittstelle Anhänger
- 53: Verbindungsarm
- 54: Anbauteil, Anbauplatte
- 55: Fernbedienung, Handgerät
- 56: Bedienfeld, Folientastatur
- 57: Steuerfeld
- 58: Bedienungshilfe, haptische Begrenzung
- 59: Steuerelement, Richtungstaste
- 60: Steuerelement, Taste, Zustellung
- 61: Steuerelement, Taste, Ein/Aus-Schalter
- 62: Fahrtrichtung
- 63: Napfverschraubung
- 64: Prägung
- 65: Flansch
- 66: Rippe
- 67: Bremse, Bremsanordnung
- 68: Profilteil, Konsolenprofil
- 69: Kanal, Führungskanal
- 70: Kanal, Schraubenkanal
- 71: Kanal, Kabelkanal
- 72: Kanal, Kabelkanal
- 73: Bodenteil
- 74: Seitenwand
- 75: Schräge
- 76: Verbindungselement, Schraube
- 77: Verbindungselement, Schraube
- 78: Verbindungselement, Schraube
- 79: Kopf, Schraubkopf
- 80: Aufnahme, Schlitzführung
- 81: Schlitz
- 82: Einführöffnung
- 83: Anbauteil, Montagehilfe
- 84: Träger, Arm
- 85: Positionierelement, Abstandshülse
- 86: Stützplatte
- 87: Lagerelement, Gleitlagerung
- 88: Mousepad
- 89: Joystick, Steuerstift
- 90: Steuerelement Geschwindigkeit
- 91: Anzeige, Richtungsanzeige
- 92: Anzeige, Betriebszustand
- 93: Energieversorgung, Batterie
- 94: Steuerung, Platine
- 95: Gehäuse
- 96: Kommunikationseinrichtung, Funkmodul
- 97: Mittelsteg

## Patentansprüche

1. Hilfsantrieb für fremdbewegte Fahrzeuge (1), insbesondere abgekuppelte Anhänger, bestehend aus mindestens einer am Fahrzeug (1) gelagerten und an ein Fahrzeugrad (13) zustellbaren Antriebseinheit (15,16) mit einem motorisch angetriebenen Antriebselement (24), wobei der Hilfsantrieb (2) eine Stützeinrichtung (18) mit einer Konsole (49) zur Befestigung der einen oder mehreren Antriebseinheit(en) (15,16) am Fahrzeug (1) an einem vertikalen Mittelsteg (97) von dessen Längsträger (6) aufweist, **dadurch gekennzeichnet, dass** die Konsole (49) als Profilteil (68) ausgebildet ist und das Antriebselement (15,16) linear führt, wobei
das Profilteil (68) weist ein Bodenteil (73) auf und besitzt mehrere Kanäle (69, 70, 71, 72), die in Längsrichtung des Profilteils (68) verlaufen, wobei das Profilteil (68) am Bodenteil (73) eine Aufnahme (80) für mehrere, insbesondre drei Verbindungselemente (76,77,78) aufweist, die dem starren Anschluss am Fahrgestell (3) dienen, wobei die Aufnahme (80) eine axial einstellbare bzw. verstellbare Befestigung der Konsole (49) am Fahrgestell (3) und eine optimale Positionierung gegenüber dem Fahrzeugrad (13) ermöglicht.

2. Hilfsantrieb nach Anspruch 1, **dadurch gekennzeichnet, dass** die Antriebseinheit (15,16) eine lineare Zustelleinrichtung (17) mit einem eigenen Zustellantrieb (42) aufweist, wobei die Konsole (49) eine Zustellführung (48) zur beweglichen Lagerung und Abstützung der Antriebseinheit (15,16) aufweist.

3. Hilfsantrieb nach Anspruch 1 oder 2, **dadurch gekennzeichnet, dass** die Anbaustelle der Konsole (49) am Fahrgestell (3) in Längsrichtung für eine Anpassung an unterschiedliche Raddurchmesser, Achs- und Lenkergeometrien veränderbar ist.

4. Hilfsantrieb nach einem der vorhergehenden Ansprüche, **dadurch gekennzeichnet, dass** die Aufnahme (80) als Schlitzführung ausgebildet ist und mehrere, insbesondre drei parallele, in Richtung einer Zustellachse (43) des Antriebselements (15,16) sich erstreckende Schlitze (81) in der Außenwand des Bodenteils (73) aufweist, wobei die Schlitze (81) zumindest an einer Stelle eine im Durchmesser vergrößerte Einführöffnung (82) für einen verbreiterten Kopf oder Schraubkopf (79) eines als Schraube oder Bolzen ausgebildeten Verbindungselements (76,77,78) aufweisen.

5. Hilfsantrieb nach einem der vorhergehenden Ansprüche, **dadurch gekennzeichnet, dass** das Profilteil (68) mindestens einen innenliegenden und im Bodenteil (73) angeordneten Kanal (70,71,72) aufweist, der sich zumindest stirnseitig am Profilteil (68) öffnet.

6. Hilfsantrieb nach einem der vorhergehenden Ansprüche, **dadurch gekennzeichnet, dass** das Profilteil (68) einen seitlich und stirnseitig offenen Führungskanal (69) für eine lineare Führung und Lagerung (48) des Antriebselements (15,16) aufweist.

7. Hilfsantrieb nach einem der vorhergehenden Ansprüche, **dadurch gekennzeichnet, dass** die Stützeinrichtung (18) eine Anbauschnittstelle (51) aufweist, die auf eine zur Antriebsabstützung adaptierte Anbauschnittstelle (52) des Fahrzeugs (1) abgestimmt ist.

8. Hilfsantrieb nach Anspruch 7, **dadurch gekennzeichnet, dass** die Stützeinrichtung (18) ein Anbauteil (83) zur Bildung einer passenden Anbauschnittstelle (51) des Hilfsantriebs (2) und zur Distanzierung des Profilteils (68) vom Längsträger (6) und zur Bildung einer Montagehilfe zur schnittstellengerechten Positionierung der Verbindungselemente (76,77,78) gegenüber einer fahrzeugseitigen Anbauschnittstelle (52) aufweist.

9. Hilfsantrieb nach Anspruch 8, **dadurch gekennzeichnet, dass** ein Anbauteil (83) der Stützeinrichtung (18) einen Träger (84) mit mehreren schnittstellengerecht angeordneten Positionierelementen (85) für die Verbindungselemente (76,77,78) aufweist.

10. Hilfsantrieb nach einem der vorhergehenden Ansprüche, **dadurch gekennzeichnet, dass** zur Befestigung des Profilteils (68) und der Verbindungselemente (76,77,78) eine Stützplatte (86) vorhanden ist zur Anordnung an der Innenseite, insbesondere dem Mittelsteg (97), eines Längsträgers (6), wobei die Stützplatte (86) entsprechende Durchgangsbohrungen für die Verbindungselemente (76,77,78) aufweist und auch der Steg (97) des Längsträgers (6) solche Durchgangsbohrungen hat, wobei die Verteilung und Anordnung dieser Durchgangsbohrungen eine fahrzeugseitige Anbauschnittstelle (52) bilden.

11. Hilfsantrieb nach Anspruch 10, **dadurch gekennzeichnet, dass** die Stützeinrichtung (18) einen Querträger (50) mit endseitigen Stützplatten (86) zur Anlage und Befestigung an Längsträgern (6) und zur Aufnahme und Abstützung der im Fahrbetrieb des Hilfsantriebs (2) auftretenden Kräfte und Momente aufweist, wobei die Stützplatten (86) den stirnseitigen Abschluss des Querträgers (50) bilden und mit diesem starr verbunden sind.

12. Hilfsantrieb nach Anspruch 2, **dadurch gekennzeichnet, dass** der Zustellantrieb (42) im Inneren des Gehäuses (40) der Antriebseinheit (15,16) angeordnet ist und mit einem externen Treibteil, insbesondere einer Zahnstange, am Profilteil (68) in Eingriff tritt.

13. Hilfsantrieb nach einem der vorhergehenden Ansprüche, **dadurch gekennzeichnet, dass** die Antriebseinheit (15,16) eine integrierte Steuerung (38) und eine drahtlose Kommunikationseinrichtung (19) aufweist zur Kommunikation von mehreren Antriebseinheiten (15,16) untereinander und mit einer Betätigungseinrichtung (20) .

## Claims

1. Auxiliary drive for vehicles (1) which are moved by external means, in particular decoupled trailers, comprising at least one drive unit (15, 16) which is mounted on the vehicle (1), can be applied against a vehicle wheel (13) and has a motor-driven drive element (24), wherein the auxiliary drive (2) has a support device (18) with a bracket (49) for the fastening of the one or more drive unit(s) (15, 16) on the vehicle (1) to a vertical central web (97) of the longitudinal member (6) of said vehicle, **characterized in that** the bracket (49) is in the form of a profiled part (68) and guides the drive element (15, 16) linearly, wherein
the profiled part (68) has a base part (73) and multiple channels (69, 70, 71, 72) that run in the longitudinal direction of the profiled part (68), wherein the profiled part (68) has, on the base part (73), a receptacle (80) for multiple, in particular three, connecting elements (76, 77, 78) which serve for rigid connection to the chassis (3), wherein the receptacle (80) permits an axially settable or adjustable fastening of the bracket (49) to the chassis (3) and optimum positioning relative to the vehicle wheel (13).

2. Auxiliary drive according to Claim 1, **characterized in that** the drive unit (15, 16) has a linear application device (17) with a dedicated application drive (42), wherein the bracket (49) has an application guide (48) for the movable mounting and support of the drive unit (15, 16).

3. Auxiliary drive according to Claim 1 or 2, **characterized in that** the attachment point of the bracket (49) on the chassis (3) can be varied in a longitudinal direction for an adaptation to different wheel diameters, axle geometries and link geometries.

4. Auxiliary drive according to one of the preceding claims, **characterized in that** the receptacle (80) is in the form of a slotted guide and has multiple, in particular three parallel, slots (81) in the outer wall of the base part (73), which slots extend in the direction of an application axis (43) of the drive element (15, 16), wherein the slots (81) have, at least at one point, an enlarged-diameter insertion opening (82) for a widened head or screw head (79) of a connecting element (76, 77, 78) in the form of a screw or bolt.

5. Auxiliary drive according to one of the preceding claims, **characterized in that** the profiled part (68) has at least one internally situated channel (70, 71, 72) which is arranged in the base part (73) and opens at least at an end side on the profiled part (68) .

6. Auxiliary drive according to one of the preceding claims, **characterized in that** the profiled part (68) has a guide channel (69), which is open laterally and at an end side, for linear guidance and mounting (48) of the drive element (15, 16).

7. Auxiliary drive according to one of the preceding claims, **characterized in that** the support device (18) has an attachment interface (51) which is coordinated with an attachment interface (52), adapted for drive support, of the vehicle (1).

8. Auxiliary drive according to Claim 7, **characterized in that** the support device (18) has an attachment part (83) for forming a suitable attachment interface (51) of the auxiliary drive (2) and for spacing the profiled part (68) apart from the longitudinal member (6) and for forming a mounting aid for the positioning, appropriate to the interface, of the connecting elements (76, 77, 78) relative to an attachment interface (52) on the vehicle.

9. Auxiliary drive according to Claim 8, **characterized in that** an attachment part (83) of the support device (18) has a carrier (84) with multiple positioning elements (85), arranged in a manner appropriate to the interface, for the connecting elements (76, 77, 78) .

10. Auxiliary drive according to one of the preceding claims, **characterized in that**, for the fastening of the profiled part (68) and of the connecting elements (76, 77, 78), a support plate (86) is provided for arrangement on the inner side, in particular on the central web (97), of a longitudinal member (6), wherein the support plate (86) has corresponding passage bores for the connecting elements (76, 77, 78), and the web (97) of the longitudinal member (6) also has passage bores of said type, wherein the distribution and arrangement of said passage bores form an attachment interface (52) on the vehicle.

11. Auxiliary drive according to Claim 10, **characterized in that** the support device (18) has a crossmember (50) with end-side support plates (86) for abutment against and fastening to longitudinal members (6) and for accommodating and supporting the forces and moments that arise during traction operation of the auxiliary drive (2), wherein the support plates (86) form the end-side termination of the crossmember (50) and are rigidly connected to said crossmember.

12. Auxiliary drive according to Claim 2, **characterized in that** the application drive (42) is arranged in the interior of the housing (40) of the drive unit (15, 16) and enters into engagement with an external drive part, in particular a toothed rack, on the profiled part (68).

13. Auxiliary drive according to one of the preceding claims, **characterized in that** the drive unit (15, 16) has an integrated controller (38) and a wireless communication device (19) for the communication of multiple drive units (15, 16) with one another and with an actuation device (20).

## Revendications

1. Mécanisme d'entraînement auxiliaire pour véhicules (1) déplacés extérieurement, notamment des remorques désaccouplées, composé d'au moins une unité d'entraînement (15, 16), munie d'un élément d'entraînement (24) entraîné de manière motorisée, montée sur le véhicule (1) et pouvant être approchée d'une roue de véhicule (13), le mécanisme d'entraînement auxiliaire (2) comprenant un dispositif de soutien (18) muni d'une console (49) servant à la fixation de l'une ou des plusieurs unités d'entraînement (15, 16) au véhicule (1) au niveau d'une âme centrale (97) verticale de son longeron (6), **caractérisé en ce que** la console (49) est réalisée sous la forme d'une pièce profilée (68) et guide linéairement l'élément d'entraînement (15, 16),
la pièce profilée (68) comprenant une pièce de fond (73) et comportant plusieurs canaux (69, 70, 71, 72) qui d'étendent dans la direction longitudinale de la pièce profilée (68), la pièce profilée (68) comprenant au niveau de la pièce de fond (73) un logement (80) pour plusieurs, notamment trois éléments de liaison (76, 77, 78) qui servent au raccordement rigide au châssis roulant (3), le logement (80) permettant une fixation réglable ou déplaçable axialement de la console (49) au châssis roulant (3) et un positionnement optimal par rapport à la roue de véhicule (13).

2. Mécanisme d'entraînement auxiliaire selon la revendication 1, **caractérisé en ce que** l'unité d'entraînement (15, 16) comprend un dispositif d'approche (17) linéaire muni d'un mécanisme d'entraînement d'approche (42) propre, la console (49) comprenant un guidage d'approche (48) servant à supporter avec mobilité et à soutenir l'unité d'entraînement (15, 16).

3. Mécanisme d'entraînement auxiliaire selon la revendication 1 ou 2, **caractérisé en ce que** l'emplacement de montage de la console (49) sur le châssis roulant (3) est modifiable dans la direction longitudinale pour une adaptation à différents diamètres de roue et géométries d'essieu et de bras oscillant.

4. Mécanisme d'entraînement auxiliaire selon l'une des revendications précédentes, **caractérisé en ce que** le logement (80) est réalisé sous la forme d'un guidage à fente et comprend plusieurs, notamment trois fentes (81) parallèles qui s'étendent dans la direction d'un axe d'approche (43) de l'élément d'entraînement (15, 16) dans la paroi extérieure de la pièce de fond (73), les fentes (81) comprenant, au moins en un endroit, une ouverture d'introduction (82) au diamètre agrandi pour une tête élargie ou une tête de vis (79) d'un élément de liaison (76, 77, 78) réalisé sous la forme d'une vis ou d'un boulon.

5. Mécanisme d'entraînement auxiliaire selon l'une des revendications précédentes, **caractérisé en ce que** la pièce profilée (68) comprend au moins un canal (70, 71, 72) intérieur et disposé dans la pièce de fond (73), lequel s'ouvre au moins du côté frontal au niveau de la pièce profilée (68).

6. Mécanisme d'entraînement auxiliaire selon l'une des revendications précédentes, **caractérisé en ce que** la pièce profilée (68) comprend un canal de guidage (69) ouvert latéralement et du côté frontal pour un guidage linéaire et un support (48) de l'élément d'entraînement (15, 16).

7. Mécanisme d'entraînement auxiliaire selon l'une des revendications précédentes, **caractérisé en ce que** le dispositif de soutien (18) comprend une interface de montage (51), qui est adaptée à une interface de montage (52) du véhicule (1) adaptée au soutien de l'entraînement.

8. Mécanisme d'entraînement auxiliaire selon la revendication 7, **caractérisé en ce que** le dispositif de soutien (18) comprend une pièce rapportée (83) destinée à former une interface de montage (51) adaptée du mécanisme d'entraînement auxiliaire (2) et servant à espacer la pièce profilée (68) du longeron (6) et à former une aide au montage en vue d'un positionnement conformément à l'interface des éléments de liaison (76, 77, 78) par rapport à une interface de montage (52) côté véhicule.

9. Mécanisme d'entraînement auxiliaire selon la revendication 8, **caractérisé en ce qu'**une pièce rapportée (83) du dispositif de soutien (18) comprend un élément porteur (84) muni de plusieurs éléments de positionnement (85) disposés conformément à l'interface pour les éléments de liaison (76, 77, 78).

10. Mécanisme d'entraînement auxiliaire selon l'une des revendications précédentes, **caractérisé en ce qu'**une plaque de soutien (86) est présente pour la fixation de la pièce profilée (68) et des éléments de liaison (76, 77, 78), destinée à être disposée sur le côté intérieur, notamment sur l'âme centrale (97), d'un longeron (6), la plaque de soutien (86) comprenant des orifices de traversée correspondants pour les éléments de liaison (76, 77, 78) et l'âme (97) du longeron (6) comportant lui aussi de tels orifices de traversée, la distribution et l'arrangement de ces orifices de traversée formant une interface de montage (52) côté véhicule.

11. Mécanisme d'entraînement auxiliaire selon la revendication 10, **caractérisé en ce que** le dispositif de soutien (18) comprend une traverse (50) munie de plaques de soutien (86) du côté des extrémités destinées à l'application et à la fixation à des longerons (6) et destinées à accueillir et à soutenir les forces et les moments qui se produisent en mode de déplacement du mécanisme d'entraînement auxiliaire (2), les plaques de soutien (86) formant la terminaison côté frontal de la traverse (50) et étant reliées de manière rigide à celle-ci.

12. Mécanisme d'entraînement auxiliaire selon la revendication 2, **caractérisé en ce que** le mécanisme d'entraînement d'approche (42) est disposé à l'intérieur du carter (40) de l'unité d'entraînement (15, 16) et vient en prise avec une pièce d'entraînement externe, notamment une crémaillère, sur la pièce profilée (68).

13. Mécanisme d'entraînement auxiliaire selon l'une des revendications précédentes, **caractérisé en ce que** l'unité d'entraînement (15, 16) comprend une commande intégrée (38) et un dispositif de communication sans fil (19) servant à la communication de plusieurs unités d'entraînement (15, 16) entre elles et avec un dispositif d'actionnement (20).
